# EUROPEAN PATENT SPECIFICATION

(11) **EP 2 680 023 B1**
(45) Date of publication and mention of the grant of the patent: **13.04.2016**
(21) Application number: 12748825.2
(22) Date of filing: 23.02.2012
(51) Int. Cl.: G01S 3/808, B60R 21/00, G08G 1/16, H04R 1/40, H04R 3/00, H04R 29/00, G01S 15/93, G01S 7/52, G01S 7/54, G08G 1/04, B60R 21/01, G01S 7/521

(54) **APPROACHING VEHICLE DETECTION DEVICE AND APPROACHING VEHICLE DETECTION METHOD**
VORRICHTUNG ZUR ERKENNUNG ENTGEGENKOMMENDER FAHRZEUGE UND VERFAHREN ZUR ERKENNUNG ENTGEGENKOMMENDER FAHRZEUGE
DISPOSITIF DE DETECTION DE VÉHICULE SE RAPPROCHANT ET PROCÉDÉ DE DETECTION DE VÉHICULE SE RAPPROCHANT

(30) Priority: 23.02.2011 JP 2011037284
(43) Date of publication of application: 01.01.2014
(73) Proprietor: TOYOTA JIDOSHA KABUSHIKI KAISHA, Toyota-shi, Aichi-ken, 471-8571 (JP)
(72) Inventor: SATO Jun, Toyota-shi Aichi 471-8571 (JP); FUNAYAMA Ryuji, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/054456
(87) International publication number: WO 2012/115205

(56) References cited:
- WO-A1-2010/038385
- JP-A- 2000 098 015
- JP-A- 2000 111 633
- JP-A- 2001 091 616
- JP-A- 2006 023 261
- JP-A- 2009 008 433
- US-A1- 2009 285 409

## Description

### Technical Field

The present invention relates to an approaching vehicle detection device and an approaching vehicle detection method capable of detecting an approaching vehicle on the basis of the sounds collected by a plurality of sound collectors.

### Background Art

In the approaching vehicle detection device, by collecting the ambient sound through a plurality of sound collectors, the movement direction of the sound source (particularly, the traveling sound of the vehicle) is specified on the basis of the phase difference of each sound. In the device disclosed in Japanese Unexamined Utility Model Registration Application Publication No. 05-92767, the frequency components of the low-frequency band and the high-frequency band are removed from the electric signals, which are output from a plurality of microphones arranged at predetermined spacings, through a band pass filter, thereby the electric signals are converted into corrected electric signals, the power of the predetermined frequency band with characteristics of the traveling sound of the vehicle is calculated from the corrected electric signals, it is determined that there is an approaching vehicle when the power level is greater than a predetermined level, the corrected electric signals are converted into noise-reduced signals by removing unwanted noise components from the corrected electric signals, cross-correlation between the noise-reduced signals of the plurality of microphones is calculated, and thereby the direction of the approach of the approaching vehicle is calculated from the difference in the time of arrival at which the correlation is maximized.

JP2000 098 015 A discloses a device and method to detect approaching vehicles without influence from sounds produced by the own vehicle. JP 2000 111 633 A discloses an approaching vehicle detecting device having sound collectors installed at door panels to avoid influences of an own engine sound. US 2009 0 285 409 A1 discloses a device according to the preamble of claim 1 performing a method according to the preamble of claim 10.

Japanese Unexamined Patent Application Publication No. 08-202999, Japanese Unexamined Patent Application Publication No. 09-128697,and Japanese Unexamined Patent Application Publication No. 09-136573 also disclose related art.

### Summary of Invention

### Technical Problem

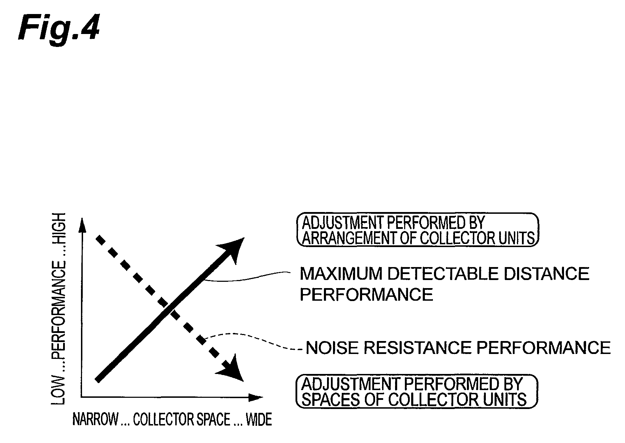

In the case where the approaching vehicle (sound source) is detected using a plurality of sound collectors (for example, two sound collectors), as shown in FIG. 4, when the spacing between the arranged two sound collectors is wide, the spatial resolution (maximum detectable distance performance or distance identification performance) is improved, but the noise resistance performance is lowered. That is, as the spacing between the sound collectors becomes wider, the angular resolution of the two sound collectors with respect to the sound source is enhanced, and the maximum detectable distance, within which the sound source is detectable, becomes longer. However, as the spacing between the sound collectors becomes wider, being affected by noise factors (for example, noise sounds from machine components, electromagnetic noises of machine components, and air currents) which are present between the sound collectors becomes easier, and it becomes easier for different sounds to be input to the sound collectors due to the effect of the extent of the spacing between the sound collectors. Hence, when there is a sound source of a noise at a position close to one sound collector thereof, the sound collector is able to easily collect the sound of the noise sound source, but the other sound collector far from the noise sound source cannot collect most of the sound of the noise sound source. Thus, the correlation between the sounds collected by the sound collectors is lowered, and the resistance to noise is lowered. On the contrary, when the spacing between the arranged two sound collectors is narrow, the noise resistance performance is enhanced (since the two sound collectors receive inputs of the noise sounds which are substantially the same in spite of the input of the noise sounds), but the spatial resolution (maximum detectable distance performance) is lowered. As described above, as for the sound collector spacing, there is a trade-off relationship between the spatial resolution (maximum detectable distance performance) and the noise resistance performance. In particular, when the vehicle moves at a high speed, the information of the approaching vehicle at a far distance is necessary, and thus it is preferable that the maximum detectable distance be long.

Accordingly, an object of the present invention is to provide an approaching vehicle detection device and an approaching vehicle detection method capable of enhancing both of the maximum detectable distance performance and the noise resistance performance.

### Solution to Problem

According to an aspect of the present invention, there is provided an approaching vehicle detection device that detects an approaching vehicle on the basis of sounds collected by a plurality of sound collectors, in which a sound source is detected using at least a single pair of the sound collectors, and approach of the sound source is detected using a different single pair of the sound collectors which are disposed to be more widely spaced than the single pair of the sound collectors.

In the approaching vehicle detection device, at least the single pair of the sound collectors and the different single pair of the sound collectors more widely spaced than the single pair of the sound collectors are disposed. The approaching vehicle detection device detects the sound source by using the sounds respectively collected by the pair of the sound collectors with a narrow spacing (that is, determines whether or not there is the sound source). In the detection, since the spacing between the pair of the sound collectors is narrow, if there is the sound source of noise, both of the sound collectors are able to collect substantially the same sounds of the noise sound source, and are thus highly resistant to noise. In addition, in the approaching vehicle detection device, if there is the sound source, the approach of the sound source is detected using the sounds respectively collected by the different pair of the sound collectors with a wide spacing (that is, whether or not the sound source (particularly, the traveling sound of the vehicle) approaches, the direction of the approach, or the like is determined). In the detection, since the spacing between the pair of the sound collectors is wide, the angular resolution of the pair of the sound collectors for the sound source is high, and the maximum detectable distance, within which the sound source is detectable, is long. As described above, in the approaching vehicle detection device, the detection operations are respectively performed using the pair of the sound collectors with the narrow spacing and the pair of the sound collectors with the wide spacing, whereby it is possible to enhance both the maximum detectable distance performance and the noise resistance performance.

In addition, the vehicle approach detection not only includes the detection as to whether or not a vehicle approaches in the right-left direction (vehicle width direction) of the vehicle but also includes the detection as to whether or not a vehicle approaches in the front-rear direction of the vehicle. A vehicle approaching in the right-left direction may include a vehicle approaching from the right direction and a vehicle approaching from the left direction. A vehicle approaching in the front-rear direction includes a vehicle approaching from the front direction and a vehicle approaching from the rear direction.

The approaching vehicle detection device according to the aspect of the present invention may include two pairs of the sound collectors that are respectively disposed on a left side and a right side of a vehicle in a vehicle width direction, in which a sound source may be detected using the two pairs of the sound collectors, and approach of the sound source may be detected using an outer sound collector of one pair of the sound collectors in the vehicle width direction and an outer sound collector of the other pair of the sound collectors in the vehicle width direction among the two pairs of the sound collectors.

In the approaching vehicle detection device, a single pair of the sound collectors is disposed on the left side of the vehicle in the vehicle width direction, and a single pair of the sound collectors is disposed on the right side. The approaching vehicle detection device detects the sound source by using the sounds respectively collected by the two pairs of the sound collectors (the pairs of the sound collectors with the narrow spacings). In addition, in the approaching vehicle detection device, if there is the sound source, the approach of the sound source is detected using the sounds which are collected by the outer sound collector of one pair of the sound collectors in the vehicle width direction and the outer sound collector of the other pair of the sound collectors in the vehicle width direction (the pair of the sound collectors with the wide spacing) among the two pairs of the sound collectors. As described above, in the approaching vehicle detection device, the four sound collectors constitute the two pairs of the sound collectors with the narrow spacings and the single pair of the sound collectors with the wide spacing, and thus it is possible to enhance both the maximum detectable distance performance and the noise resistance performance.

The approaching vehicle detection device according to the aspect of the present invention may include three sound collectors that are arranged in a vehicle width direction of a vehicle, in which a sound source is detected using a center sound collector and an outer sound collector in the vehicle width direction among the three sound collectors, and approach of the sound source is detected using both of the two outer sound collectors in the vehicle width direction among the three sound collectors.

In the approaching vehicle detection device, the three sound collectors are arranged in the vehicle width direction of the vehicle. The approaching vehicle detection device detects the sound source by using the sounds which are respectively collected by the pairs of the center sound collector and the outer sound collectors among the three sound collectors (the pairs of the sound collectors with the narrow spacings). In addition, the approaching vehicle detection device detects the approach of the sound source by using the sounds which are respectively collected by the pair of the two outer sound collectors on the right side and the left side in the vehicle width direction among the three sound collectors (the pair of the sound collectors with the wide spacing) if there is the sound source. As described above, in the approaching vehicle detection device, the three sound collectors constitute the two pairs of the sound collectors with the narrow spacings and the single pair of the sound collectors with the wide spacing, and thus it is possible to enhance both the maximum detectable distance performance and the noise resistance performance with the minimum number of sound collectors.

In the approaching vehicle detection device according to the aspect of the present invention, it is preferable that the different single pair of the sound collectors, which are disposed to be widely spaced, be omnidirectional sound collectors, and it is preferable that both of them be respectively disposed at both ends in the vehicle width direction.

In the approaching vehicle detection device, the sound collectors as the pair of the sound collectors with the wide spacing are disposed at the right end and the left end of the vehicle in the vehicle width direction. The sound collectors at both ends are omnidirectional sound collectors, and are able to collect sounds from the sound sources in all directions. In contrast, since the vehicle body itself serves as a sound insulation object, it is difficult for the sound collector, which is disposed on the inside in the vehicle width direction, to collect the sound from the sound source on the rear side (in addition, the front side when the sound collector is disposed on the rear part), compared with the sound collectors at both ends. Therefore, in the approaching vehicle detection device, the sounds collected by the pair of the sound collectors at both ends are compared with the sounds collected by the pair of the inner sound collectors, whereby it is possible to detect whether the approach is approach from the front direction or approach from the rear direction. As described above, in the approaching vehicle detection device, the omnidirectional sound collectors as the pair of the sound collectors with the wide spacing are disposed on both ends of the vehicle in the vehicle width direction, whereby it is possible to determine whether the vehicle approaches from the front side or the vehicle approaches from the rear side.

In the approaching vehicle detection device according to the aspect of the present invention, at least one sound collector may be disposed on a side opposite to a side on which each pair of the sound collectors is disposed in a front-rear direction of the vehicle.

In the approaching vehicle detection device, at least one sound collector is disposed on the side (for example, on the rear part when the pairs of the sound collectors are disposed on the front part of the vehicle) opposite to the side on which each pair of the sound collectors is disposed in the front-rear direction of the vehicle. For example, when at least one sound collector is disposed on the rear part of the vehicle (that is, when the pairs of the sound collectors are disposed on the front part of the vehicle), it is easy for the pair of the sound collectors on the rear side and at the right front end to collect the sound from the sound source on the rear right side, and it is easy for the pair of the sound collectors on the rear side and at the left end to collect the sound from the sound source on the rear left side. Therefore, in the approaching vehicle detection device, the sounds collected by the pair of the sound collector at the right end and the sound collector, which is disposed on the opposite side in the front-rear direction, are compared with the sounds collected by the pair of the sound collector at the left end and the sound collector which is disposed on the opposite side in the front-rear direction, whereby it is possible to detect whether the approach is approach from the right direction or approach from the left direction on the rear side (or the front side). As described above, in the approaching vehicle detection device, at least one sound collector is disposed on the opposite side in the front-rear direction, whereby it is possible to determine whether the vehicle approaches from the right direction or the vehicle approaches from the left direction on the rear side (or the front side).

In the approaching vehicle detection device according to the aspect of the present invention, spacings of the plurality of sound collectors may be set as spacings which are specified by a Fibonacci sequence.

In the approaching vehicle detection device, the spacings of the plurality of sound collectors are set as the spacings which are specified by the Fibonacci sequence, and the plurality of sound collectors is arranged at the spacings. As described above, in the approaching vehicle detection device, by placing the plurality of sound collectors at the spacings which are specified by the Fibonacci sequence, pairs of the sound collectors with more various spacings between the sound collectors can be set using a small number of the sound collectors. Incidentally, since a sound has a periodic waveform, if the period thereof coincides with or is a multiple of the spacing between the pair of the sound collectors, the detection performance may be lowered when the sound source is detected using the pair of the sound collectors. In such a case, if a pair of the sound collectors with a different spacing is used, the detection is possible. Consequently, when there are multiple variations in the spacings between the pair of the sound collectors, it is possible to detect sounds with various periods, and thus the detection performance is enhanced.

The approaching vehicle detection device according to the aspect of the present invention includes fault diagnosis means for diagnosing faults in the sound collector, in which if there is the sound collector which is diagnosed as faulty by the fault diagnosis means, the sound collector, which is diagnosed as faulty, is excluded from the sound collectors which are used in detecting the approaching vehicle.

In the approaching vehicle detection device, the fault diagnosis means diagnoses whether each sound collector is faulty, and the sound collector, which is diagnosed as faulty, is excluded, whereby the approaching vehicle is detected. As described above, in the approaching vehicle detection device, by excluding the faulty sound collector and performing the detection, it is possible to improve the reliability of the detection.

In the approaching vehicle detection device according to the aspect of the present invention, if there is the sound collector which is diagnosed as faulty by the fault diagnosis means, the reliability of the detection of the approaching vehicle may be set to be low.

In the approaching vehicle detection device, when the fault diagnosis means diagnoses that the sound collector is faulty, the number of the sound collectors, which can be used in the approach detection, is reduced, and thus the reliability of the detection of the approaching vehicle is set to be low. By setting the low reliability of the approaching vehicle detection, when performing driving support such as alarm output or vehicle control on the basis of the detection information of the approaching vehicle, in accordance with the reliability, it is possible to change the level of the driving support, for example, it is possible to increase the level of the criteria as to whether or not to perform the alarm output or the vehicle control, or it is possible to perform setting to decrease the level of the alarm output or the vehicle control. In addition, as the number of the faulty sound collectors increases, the reliability may be set to be lower, or the reliability may be set to be low on the basis of the ratio of the total number of the sound collectors to the number of operable sound collectors or the ratio of the number of faulty sound collectors to the number of operable sound collectors.

The approaching vehicle detection device according to the aspect of the present invention includes sound generating means for generating a sound with a specific frequency component, in which the sound, which is generated by the sound generating means, is collected by each of the plurality of sound collectors, and the plurality of sound collectors is adjusted to have constant sensitivities to the sound with the specific frequency component.

In the approaching vehicle detection device, the sound generating means generates the sound with the specific frequency component, and the sound with the specific frequency component is collected by each of the plurality of sound collectors. In a case where the sensitivities of the sound collectors are lowered due to aging degradation, even when the sounds with the same frequency component are respectively collected by the plurality of sound collectors, the levels of the sounds, which are output from the plurality of sound collectors, are different. When the detection is performed using the pair of the sound collectors with different sensitivities, the detection performance is lowered. For this reason, in the approaching vehicle detection device, the plurality of sound collectors is adjusted to have constant sensitivities to the sound with the specific frequency component. As described above, in the approaching vehicle detection device, by adjusting the sensitivities of the plurality of sound collectors to a constant value for each frequency component, the detection performance is enhanced.

According to another aspect of the present invention, there is provided an approaching vehicle detection method that detects an approaching vehicle on the basis of sounds collected by a plurality of sound collectors, in which a sound source is detected using at least a single pair of the sound collectors, and approach of the sound source is detected using a different single pair of the sound collectors which are disposed to be more widely spaced than the single pair of the sound collectors. The approaching vehicle detection method has the same effects as the approaching vehicle detection device, and thus has the same advantages.

### Advantageous Effects of Invention

According to the aspects of the present invention, by respectively performing the detection operations using the pair of the sound collectors with the narrow spacing and the pair of the sound collectors with the wide spacing, it is possible to enhance both the maximum detectable distance performance and the noise resistance performance.

### Brief Description of Drawings

[FIG. 1] FIG. 1 is a configuration diagram of an approaching vehicle detection device according to first and second embodiments.
[FIG. 2] FIG 2 is a diagram of arrangement of the sound collectors of the approaching vehicle detection device according to the first embodiment.
[FIG. 3] FIG. 3 is a table for determination of the direction of the approach of a vehicle based on the phase difference change and the sound pressure change.
[FIG. 4] FIG. 4 is a diagram of a relationship between the noise resistance performance and the maximum detectable distance performance (spatial resolution) according to the sound collector spacing.
[FIG. 5] FIG. 5 is a flowchart illustrating flow of a process in ECU of the approaching vehicle detection device according to the first embodiment.
[FIG. 6] FIG. 6 is a diagram of arrangement of the sound collectors of the approaching vehicle detection device according to the second embodiment.
[FIG. 7] FIG. 7 is a flowchart illustrating flow of a process in ECU of the approaching vehicle detection device according to the second embodiment.
[FIG. 8] FIG 8 is a configuration diagram of an approaching vehicle detection device according to a third embodiment.
[FIG. 9] FIG 9 is a diagram of arrangement of the sound collectors of the approaching vehicle detection device according to the third embodiment.
[FIG. 10] FIG. 10 is a flowchart illustrating flow of a process in ECU of the approaching vehicle detection device according to the third embodiment.
[FIG. 11] FIG. 11 is a diagram of arrangement of sound collectors of an approaching vehicle detection device according to a fourth embodiment.
[FIG. 12] FIG. 12 is a diagram of spacings and arrangement of sound collectors of an approaching vehicle detection device according to a fifth embodiment.
[FIG. 13] FIG. 13 is a diagram of arrangement of sound collectors of an approaching vehicle detection device according to a sixth embodiment.
[FIG. 14] FIG. 14 is a diagram of spacings and arrangement of sound collectors of an approaching vehicle detection device according to a seventh embodiment.
[FIG. 15] FIG 15 is an example of the sound collector spacings when some of the sound collectors are faulty in the approaching vehicle detection device according to the seventh embodiment.

### Description of Embodiments

Hereinafter, referring to the drawings, approaching vehicle detection devices and approaching vehicle detection methods according to embodiments of the present invention will be described. It should be noted that the same or corresponding elements in the drawings are represented by the same reference numerals and signs and repeated description thereof will be omitted.

In the present embodiment, the present invention is applied to an approaching vehicle detection device mounted on a vehicle. The approaching vehicle detection device according to the present embodiment detects a vehicle approaching to a host vehicle on the basis of the sounds collected by a plurality of (at least three) sound collectors (microphones) (that is, specifies a movement direction of a sound source of a traveling sound of a neighboring vehicle), and provides information of the approaching vehicle to a driving support device. The present embodiment includes first to third embodiments with different methods of placing the plurality of sound collectors and detecting the approaching vehicle, and fourth to seventh embodiments showing multiple variations of the arrangement of the plurality of sound collectors.

It should be noted that the traveling sound of a vehicle is mostly formed of road noise (frictional noise between a tire surface and a road surface) and pattern noise (turbulence (compression or release) of air in a tire groove). The range of the frequency components of the traveling sound of the vehicle may be measured by experiment, or the like, in advance.

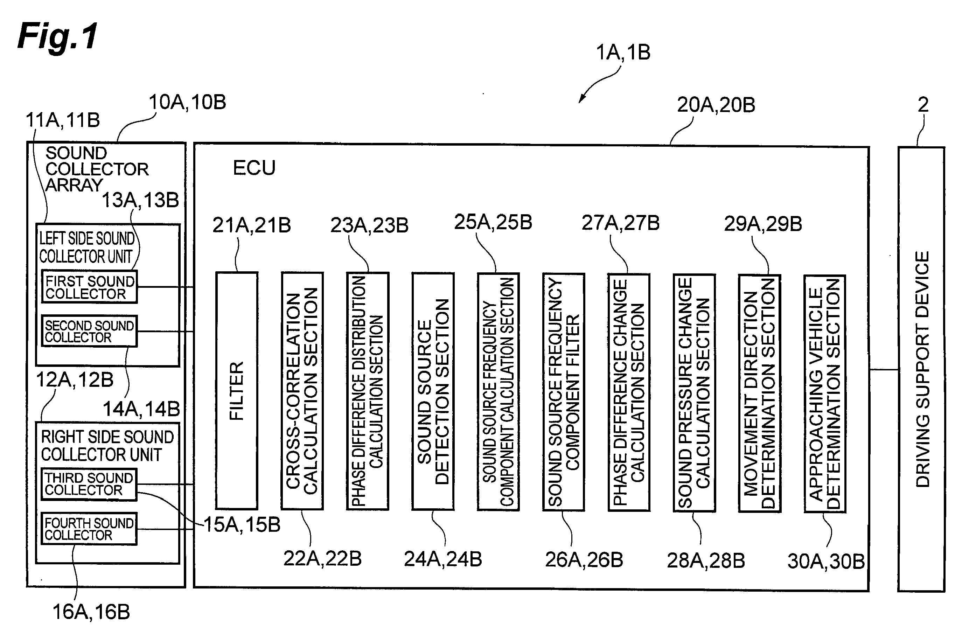

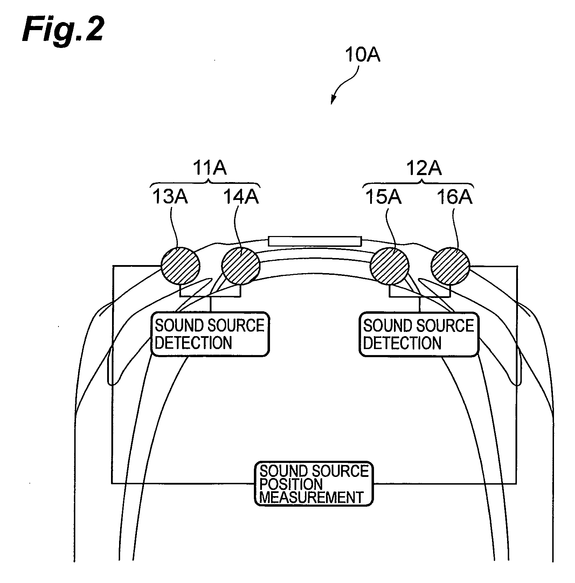

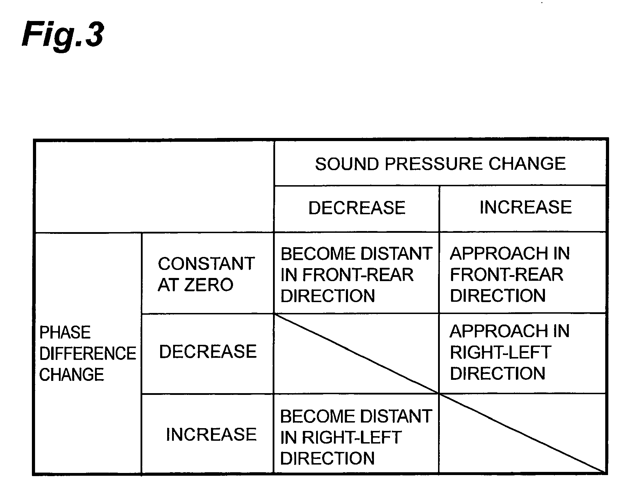

Referring to FIGS. 1 to 4, the approaching vehicle detection device 1A according to the first embodiment will be described. FIG 1 is a configuration diagram of an approaching vehicle detection device according to first and second embodiments. FIG. 2 is a diagram of arrangement of the sound collectors of the approaching vehicle detection device according to the first embodiment. FIG. 3 is a table for determination of the direction of the approach of a vehicle based on the phase difference change and the sound pressure change. FIG. 4 is a diagram of a relationship between the noise resistance performance and the maximum detectable distance performance (spatial resolution) according to the sound collector spacing.

An approaching vehicle detection device 1A has four sound collectors, in which sound collector units, each of which is formed of two sound collectors (a pair of sound collectors), are disposed on the left side and the right side in the vehicle width direction. First, in the approaching vehicle detection device 1A, in order to enhance the noise resistance performance, a sound source is detected using each sound collector unit (the pair of the sound collectors with the narrow spacing). Next, in the approaching vehicle detection device 1A, in order to enhance the maximum detectable distance performance, determination as to the movement direction of the sound source (position measurement of the sound source) is performed on the detected sound source by using the outer sound collectors (the pair of the sound collectors with the wide spacing) of the sound collector units. In addition, in the approaching vehicle detection device 1A, a process of detecting the approaching vehicle is a basic detection process.

The approaching vehicle detection device 1A includes a sound collector array 10A (a left side sound collector unit 11A (a first sound collector 13A and a second sound collector 14A) and a right side sound collector unit 12A (a third sound collector 15A and a fourth sound collector 16A)) and an electronic control unit (ECU) 20A (a filter 21 A, a cross-correlation calculation section 22A, a phase difference distribution calculation section 23A, a sound source detection section 24A, a sound source frequency component calculation section 25A, a sound source frequency component filter 26A, a phase difference change calculation section 27A, a sound pressure change calculation section 28A, a movement direction determination section 29A, and an approaching vehicle determination section 30A).

The sound collector array 10A has the left side sound collector unit 11A and the right side sound collector unit 12A. The left side sound collector unit 11A and the right side sound collector unit 12A are disposed, as shown in FIG. 2, on the left side and the right side of the front end of the vehicle in the vehicle width direction (the right-left direction) at the same height. The spacing of the arrangement is a spacing wider than the spacing between the pair of the sound collectors within each of the sound collector units 11A and 12A.

The left side sound collector unit 11A has the first sound collector 13A and the second sound collector 14A. The first sound collector 13A is disposed on the outer left side in the vehicle width direction. The second sound collector 14A is disposed close to the center of the vehicle at a predetermined spacing from the first sound collector 13A. The right side sound collector unit 12A has the third sound collector 15A and the fourth sound collector 16A. The fourth sound collector 16A is disposed on the outer right side in the vehicle width direction. The third sound collector 15A is disposed close to the center of the vehicle at a predetermined spacing from the fourth sound collector 16A. The spacing between the sound collectors in each of the sound collector units 11A and 12A is set to be narrow, whereby it is possible to enhance the noise resistance performance as the spacing is narrow.

Each of the sound collectors 13A, 14A, 15A and 16A is an omnidirectional sound collector, and collects ambient sounds outside the vehicle. Each of the sound collectors 13A, 14A, 15A and 16A is an acoustic-electric converter, converts a collected sound to an electric signal, and transmits the electric signal to the ECU 20A.

As shown in FIG. 4, as the spacing between the two sound collectors in the vehicle width direction becomes wider, the maximum detectable distance performance (spatial resolution) becomes higher, and the noise resistance performance becomes lower. In contrast, as the spacing between the two sound collectors in the vehicle width direction becomes narrower, the maximum detectable distance performance becomes lower, and the noise resistance performance becomes higher. Accordingly, by performing the detection using the pair of the narrowly spaced sound collectors of each of the sound collector units 11A and 12A, it is possible to enhance the noise resistance performance. In particular, as the spacing between the pair of the sound collectors is set to be narrower, it is possible to further enhance the noise resistance performance. Further, by performing the detection using the pair of the widely spaced sound collectors of the first sound collector 13A on the outer side in the left side sound collector unit 11A and the fourth sound collector 16A on the outer side in the right side sound collector unit 12A, it is possible to enhance the maximum detectable distance performance. In particular, as the spacing between the pair of the sound collectors is set to be wider, it is possible to further enhance the maximum detectable distance performance.

The ECU 20A is an electronic control unit formed of a central processing unit (CPU), a read only memory (ROM), a random access memory (RAM), and the like, and integrally controls the approaching vehicle detection device 1A. In the ECU 20A, approaching vehicle detecting applications stored in the ROM are loaded onto the RAM, and are executed by the CPU. The ECU 20A includes the filter 21A, the cross-correlation calculation section 22A, the phase difference distribution calculation section 23A, the sound source detection section 24A, the sound source frequency component calculation section 25A, the sound source frequency component filter 26A, the phase difference change calculation section 27A, the sound pressure change calculation section 28A, the movement direction determination section 29A, and the approaching vehicle determination section 30A. In addition, in the ECU 20A, the electric signals are respectively input from the first sound collector 13A, the second sound collector 14A, the third sound collector 15A, and the fourth sound collector 16A, whereby processes of the filters 21A and 26A and the processing sections 22A, 23A, 24A, 25A, 27A, 28A, 29A, and 30A are performed using the electric signals at predetermined time intervals.

The filter 21A is a filter that removes a predetermined frequency band from the electric signals. The filter 21A removes a high frequency band, which is higher than a band including the full frequency band of the traveling sound of the vehicle, and a low frequency band, which is lower than that, from the electric signal whenever the electric signal is input from each of the sound collectors 13A, 14A, 15A, and 16A. Through the filtering, only the electric signal with the frequency band, in which the characteristics of the traveling sound of the vehicle mainly appear, is output.

The cross-correlation calculation section 22A calculates the cross-correlation value between the electric signals between the two sound collectors filtered through the filter 21A or the sound source frequency component filter 26A for each pair of the sound collectors. Here, a correlation value, which indicates how much the waveforms of the electric signals of the pair of the sound collectors are similar (how much the waveforms are approximate), is calculated. In the first embodiment, a cross-correlation value between the electric signals of the first sound collector 13A and second sound collector 14A of the left side sound collector unit 11A, a cross-correlation value between the electric signals of the third sound collector 15A and the fourth sound collector 16A of the right side sound collector unit 12A, and a cross-correlation value between the electric signals of the first sound collector 13A and the fourth sound collector 16A are calculated.

The phase difference distribution calculation section 23A calculates the phase difference between the electric signals of the two sound collectors when the cross-correlation is calculated by the cross-correlation calculation section 22A, for each pair of the sound collectors of the sound collector units 11A and 12A. Furthermore, the phase difference distribution calculation section 23A calculates distribution (variation) of the phase differences by using the phase difference calculated for each predetermined time interval.

In addition, when the cross-correlation value or the phase difference is calculated, for example, the calculation is performed using a cross-correlation function or using frequency information which is obtained by the Fourier transform.

The sound source detection section 24A detects the sound source, which is continuously present, on the basis of the distribution of the phase differences and the cross-correlation values, for each pair of the sound collectors of the sound collector units 11A and 12A. Here, by determining whether or not the cross-correlation value is equal to or greater than a threshold value (for determining the cross-correlation value), it is determined whether or not the sounds respectively collected by the pair of the sound collectors are similar. The threshold value (for determining the cross-correlation value) is a threshold value for determining whether or not the waveforms of the electric signals are similar on the basis of the cross-correlation value, and is thus set by experiment or the like in advance. Further, by determining whether or not the distribution of the phase differences is equal to or less than a threshold value (for determining the phase difference distribution), it is determined whether the sound source is continuously present at the position of the sound collected by the pair of the sound collectors. The threshold value (for determining the phase difference distribution) is a threshold value for determining whether or not the sound source is continuously present at the position of the sound source on the basis of the phase difference distribution, and is thus set by experiment or the like in advance. Then, if the cross-correlation value is equal to or greater than the threshold value (for determining the cross-correlation value) and if the phase difference distribution is equal to or less than the threshold value (for determining the phase difference distribution), it is determined that the sound source is continuously present. If the above condition is not satisfied, it is determined that the sound source is not present.

The sound source frequency component calculation section 25A calculates the frequency component of the sound source by using the detected two electric signals of the pair of the sound collectors when the sound source detection section 24A detects the sound source. Here, a high frequency component (a frequency component of which the cross-correlation value is higher than the threshold value (for determining the phase difference distribution)) of the cross-correlation value between the two electric signals of the pair of the sound collectors, by which the sound source is detected, is calculated.

The sound source frequency component filter 26A is a filter that extracts only a specific frequency band. The sound source frequency component filter 26A extracts the frequency component of the sound source, which is calculated by the sound source frequency component calculation section 25A, from the electric signal of the sound collector. In the first embodiment, the frequency components of the sound source are extracted from the electric signal of the first sound collector 13A and the electric signal of the fourth sound collector 16A.

The phase difference change calculation section 27A calculates the phase difference between the electric signals with the specific frequency component when the cross-correlation calculation section 22A calculates the cross-correlation between the electric signals from which the specific frequency components are respectively extracted by the sound source frequency component filter 26A for the pair of the sound collectors. Further, the phase difference change calculation section 27A calculates the temporal change in the phase difference of the detected sound source by using the phase differences calculated for each predetermined time interval. In the first embodiment, the temporal change in the phase difference between the electric signal of the first sound collector 13A and the electric signal of the fourth sound collector 16A is calculated.

The sound pressure change calculation section 28A calculates each temporal change of the sound pressures by using the electric signals from which the specific frequency components are respectively extracted through the sound source frequency component filter 26A for the pair of the sound collectors. In the first embodiment, the temporal changes in the sound pressures of the electric signal of the first sound collector 13A and the electric signal of the fourth sound collector 16A are respectively calculated.

The movement direction determination section 29A determines the movement direction of the sound source (that is, the traveling sound of the vehicle), on the basis of the temporal change in the phase difference of the sound source calculated by the phase difference change calculation section 27A and the temporal changes in the sound pressures of the sound source calculated by the sound pressure change calculation section 28A. Here, as shown in FIG. 3, when the temporal change in the phase difference decreases and the temporal change in the sound pressure increases, it is determined that the sound source approaches in the right-left direction (in particular, the right-left direction of the front side) of the host vehicle. When the temporal change in the phase difference increases and the temporal change in the sound pressure decreases, it is determined that the sound source becomes distant in the right-left direction of the host vehicle. When the temporal change in the phase difference is constant at zero (or approximately zero) and the temporal change in the sound pressure increases, it is determined that the sound source approaches in the front-rear direction of the host vehicle. When the temporal change in the phase difference is zero (or approximately zero) and the temporal change in the sound pressure decreases, it is determined whether the sound source becomes distant in the front-rear direction of the host vehicle.

The approaching vehicle determination section 30A determines whether or not a vehicle approaches or becomes distant on the basis of the determination result of the movement direction determination section 29A. If there is an approaching vehicle, the approaching vehicle determination section 30A determines whether the approaching vehicle approaches in the right-left direction or approaches in the front-rear direction, on the basis of the determination result of the movement direction determination section 29A. In the case of the vehicle approaching in the right-left direction, the approaching vehicle determination section 30A determines whether the approaching vehicle approaches from the left direction or from the right direction, on the basis of the change in the phase difference. Then, the approaching vehicle determination section 30A generates approaching vehicle information on the basis of the determination result, and transmits the approaching vehicle information to the driving support device 2. The approaching vehicle information is, for example, information as to whether or not there is an approaching vehicle, or information about the direction of the approach and the relative distance from the host vehicle when there is an approaching vehicle. The relative distance from the host vehicle is calculated from the phase difference.

The driving support device 2 is a device that provides various driving supports to a driver. Particularly, the driving support device 2 receives approaching vehicle information from the approaching vehicle detection device 1A at predetermined time intervals, and then provides driving supports for the approaching vehicle. For example, when there is a vehicle approaching the host vehicle, it is determined whether the approaching vehicle is likely to collide with the host vehicle, and, when it is determined that the approaching vehicle is likely to collide with the host vehicle, an alarm is issued to the driver or information about the approaching vehicle is provided to the driver, and, furthermore, vehicle control, such as automatic braking, is performed when the possibility of the collision increases.

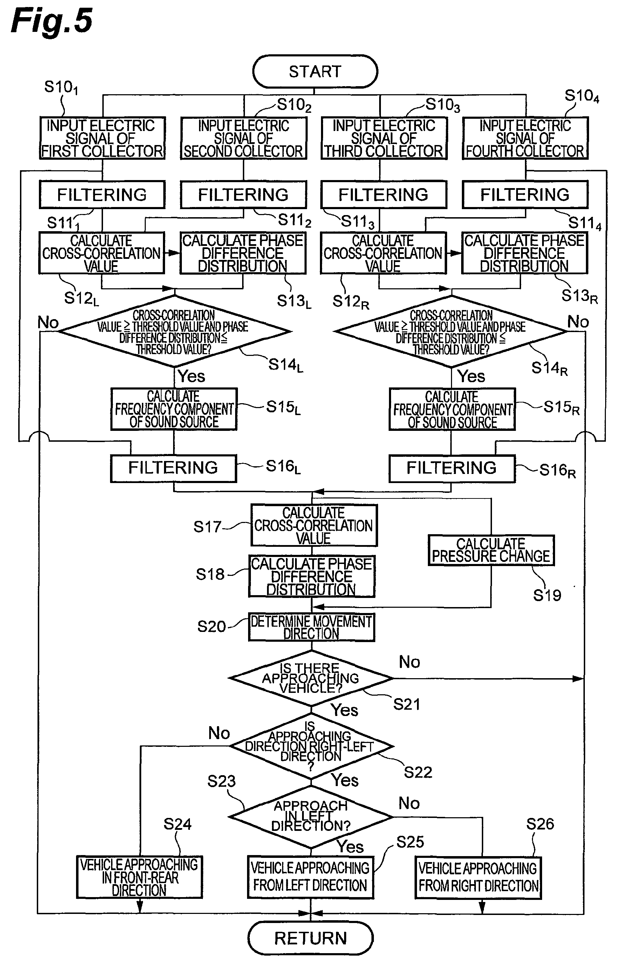

Next, referring to FIGS. 1 to 4, the operation of the approaching vehicle detection device 1A will be described. In particular, the process of the ECU 20A will be described in accordance with the flowchart of FIG. 5. FIG. 5 is a flowchart illustrating flow of the process in the ECU of the approaching vehicle detection device according to the first embodiment.

Each of the sound collectors 13A, 14A, 15A, and 16A collects the ambient sound outside the vehicle, converts the collected sound into an electric signal, and transmits the signal to the ECU 20A.

For each predetermined time interval, in the ECU 20A, when an electric signal is input from the first sound collector 13A (S101), the high frequency band and the low frequency band are removed from the electric signal through the filter 21 A (S111). Further, in the ECU 20A, when an electric signal is input from the second sound collector 14A (S102), the high frequency band and the low frequency band are removed from the electric signal through the filter 21A (S112). Furthermore, in the ECU 20A, when an electric signal is input from the third sound collector 15A (S103), the high frequency band and the low frequency band are removed from the electric signal through the filter 21A (S113). Moreover, in the ECU 20A, when an electric signal is input from the fourth sound collector 16A (S104), the high frequency band and the low frequency band are removed from the electric signal through the filter 21A (S114).

Next, the cross-correlation calculation section 22A of the ECU 20A calculates the cross-correlation value between the filtered electric signal of the first sound collector 13A and the filtered electric signal of the second sound collector 14A (S12L). Further, the phase difference distribution calculation section 23A of the ECU 20A calculates the distribution of the phase difference between the filtered electric signal of the first sound collector 13A and the filtered electric signal of the second sound collector 14A (S13L). Furthermore, the cross-correlation calculation section 22A of the ECU 20A calculates the cross-correlation value between the filtered electric signal of the third sound collector 15A and the filtered electric signal of the fourth sound collector 16A (S 12R). In addition, the phase difference distribution calculation section 23A of the ECU 20A calculates the distribution of the phase differences between the filtered electric signal of the third sound collector 15A and the filtered electric signal of the fourth sound collector 16A (S 13R).

Then, the sound source detection section 24A of the ECU 20A determines whether or not the cross-correlation value between the electric signals of the first sound collector 13A and the second sound collector 14A is equal to or greater than the threshold value (for determining the cross-correlation value), and determines whether or not the distribution of the phase differences between the electric signals of the first sound collector 13A and the second sound collector 14A is equal to or less than the threshold value (for determining the phase difference distribution) (S14L). In the determination of S14L, if it is determined that the cross-correlation value is less than the threshold value (for determining the cross-correlation value) or the phase difference distribution is greater than the threshold value (for determining the phase difference distribution), the sound source detection section 24A of the ECU 20A determines that the sound source is undetectable through the left side sound collector unit 11A.

Further, the sound source detection section 24A of the ECU 20A determines whether or not the cross-correlation value between the electric signals of the third sound collector 15A and the fourth sound collector 16A is equal to or greater than the threshold value (for determining the cross-correlation value), and determines whether or not the distribution of the phase differences between the electric signals of the third sound collector 15A and the fourth sound collector 16A is equal to or less than the threshold value (for determining the phase difference distribution) (S14R). In the determination of S14R, if it is determined that the cross-correlation value is less than the threshold value (for determining the cross-correlation value) or the phase difference distribution is greater than the threshold value (for determining the phase difference distribution), the sound source detection section 24A of the ECU 20A determines that the sound source is undetectable through the left side sound collector unit 11A.

In the determination of S14L, if it is determined that the cross-correlation value is equal to or greater than the threshold value (for determining the cross-correlation value) and the phase difference distribution is equal to or less than the threshold value (for determining the phase difference distribution), the sound source detection section 24A of the ECU 20A determines that the sound source is detectable through the left side sound collector unit 11A. Here, it is detected that the sound source of the specific frequency component is present at a predetermined distance, and a plurality of sound sources may be present. The sound source frequency component calculation section 25A of the ECU 20A calculates the frequency component of the sound source in which the cross-correlation between the electric signals of the first sound collector 13A and the second sound collector 14A is high (S 15L). Then, the sound source frequency component filter 26A of the ECU 20A extracts the frequency component (frequency band) of the sound source calculated from the electric signal of the first sound collector 13A (S16L). When a plurality of sound sources is detected, the frequency components are extracted from the sound sources, respectively.

In the determination of S14R, if it is determined that the cross-correlation value is equal to or greater than the threshold value (for determining the cross-correlation value) and the phase difference distribution is equal to or less than the threshold value (for determining the phase difference distribution), the sound source detection section 24A of the ECU 20A determines that the sound source is detectable through the right side sound collector unit 12A. The sound source frequency component calculation section 25A of the ECU 20A calculates the frequency component of the sound source in which the cross-correlation between the electric signals of the third sound collector 15A and the fourth sound collector 16A is high (S15R). Then, the sound source frequency component filter 26A of the ECU 20A extracts the frequency component (frequency band) of the sound source calculated from the electric signal of the fourth sound collector 16A (S16R). When a plurality of sound sources is detected, the frequency components are extracted from the sound sources, respectively.

In addition, in the filtering of S16L and S16R, only the sound source of the frequency component, which is common on the right and left sides, may be extracted from the sound sources which are respectively detected on the left side and the right side.

Next, the cross-correlation calculation section 22A of the ECU 20A calculates the cross-correlation between the frequency component of the sound source extracted from the electric signal of the first sound collector 13A and the frequency component of the sound source extracted from the electric signal of the fourth sound collector 16A (S 17), and the phase difference change calculation section 27A calculates the temporal change in the phase difference (S18). Further, the sound pressure change calculation section 28A of the ECU 20A calculates the temporal changes in the sound pressures from the frequency component of the sound source extracted from the electric signal of the first sound collector 13A and the frequency component of the sound source extracted from the electric signal of the fourth sound collector 16A (S19).

Next, the movement direction determination section 29A of the ECU 20A determines the movement direction of the sound source on the basis of the temporal change in the phase difference and the temporal changes in the sound pressures (S20). Then, the approaching vehicle determination section 30A of the ECU 20A determines whether or not there is a vehicle approaching to the host vehicle on the basis of the determination result (S21). If it is determined that the approaching vehicle is not present in the determination of S21, the ECU 20A terminates the current process. If it is determined that there is an approaching vehicle in S21, the approaching vehicle determination section 30A of the ECU 20A determines whether or not the direction of the approach of the approaching vehicle is the right-left direction, on the basis of the determination result (S22). If it is determined that the direction of the approach is not the right-left direction in the determination of S22, the approaching vehicle determination section 30A of the ECU 20A determines that the vehicle approaches in the front-rear direction (S24). If it is determined that the direction of the approach is the right-left direction in the determination of S22, the approaching vehicle determination section 30A of the ECU 20A determines whether or not the approach is from the left direction, on the basis of the change in the phase difference (S23). If it is determined that the approach is from the left direction in the determination of S23, the approaching vehicle determination section 30A of the ECU 20A determines that the vehicle approaches from the left direction (S25). If it is determined that the approach is not from the left direction in the determination of S23, the approaching vehicle determination section 30A of the ECU 20A determines that the vehicle approaches from the right direction (S26).

The ECU 20A generates the approaching vehicle information on the basis of the determination results, and transmits the approaching vehicle information to the driving support device 2. The ECU 20A repeatedly performs the process.

According to the approaching vehicle detection device 1A, the pairs of the sound collectors with the narrow spacings constitute the sound collector units 11A and 12A, and each of the sound collector units 11A and 12A detects the sound source, thereby enhancing the noise resistance performance. Further, according to the approaching vehicle detection device 1A, the outer sound collectors 13A and 16A of the sound collector units 11A and 12A constitute the pair of the sound collectors with the wide spacing, and the pair of the sound collectors measures the position of the sound source, thereby increasing the spatial resolution (angular resolution) and enhancing the maximum detectable distance performance. As described above, since the approaching vehicle detection device 1A is favorable in view of both the noise resistance performance and the maximum detectable distance performance, it is possible to suppress the effect of the noise and thus detect an approaching vehicle at a far location with high accuracy.

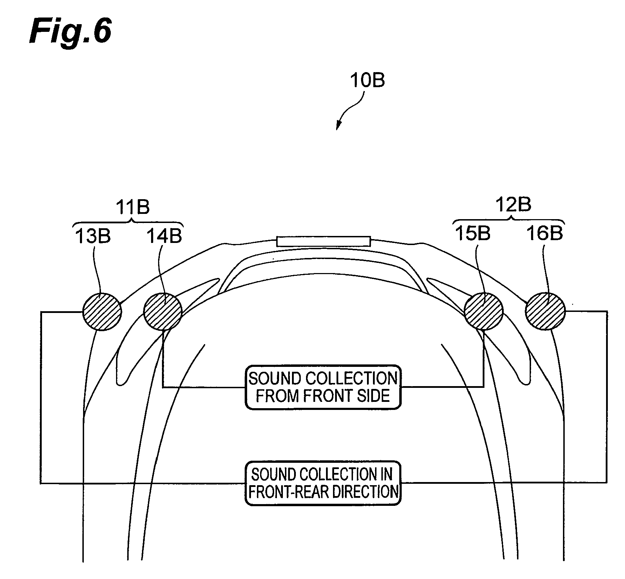

Referring to FIGS. 1 and 6, the approaching vehicle detection device 1B according to the second embodiment will be described. FIG. 6 is a diagram of arrangement of the sound collectors of the approaching vehicle detection device according to the second embodiment.

The approaching vehicle detection device 1B is able to determine whether the vehicle approaches from the front side or the vehicle approaches from the rear side if there is a vehicle approaching in the front-rear direction, compared with the approaching vehicle detection device 1A according to the first embodiment. Hence, the approaching vehicle detection device 1B has four sound collectors similarly to the approaching vehicle detection device 1A, but the outer left side sound collector and the outer right side sound collector are disposed at the corners of the outermost ends in the vehicle width direction. Then, the approaching vehicle detection device 1B performs not only the process of detecting the approaching vehicle which is a basic process of the approaching vehicle detection device 1A, but also the determination as to whether the sound source is from the front side or the rear side if there is a vehicle approaching in the front-rear direction.

In addition, if there is a vehicle approaching in the front-rear direction, the approaching vehicle (sound source) may be present on either the front side or the rear side of the host vehicle. Even in this case, when the approaching vehicle is just opposite to the host vehicle, the phase difference between the electric signals of the pair of the sound collectors is zero (or approximately zero). Hence, in the process of performing the determination as to the approaching vehicle in the first embodiment, it can be determined whether the vehicle approaches in the front-rear direction on the basis of the condition in which the temporal change in the phase difference is zero and the temporal change in the sound pressure increases, but it cannot be determined whether the vehicle approaches from the front side or the rear side.

The approaching vehicle detection device 1B includes a sound collector array 10B (a left side sound collector unit 11B (a first sound collector 13B and a second sound collector 14B) and a right side sound collector unit 12B (a third sound collector 15B and a fourth sound collector 16B)) and an ECU 20B (a filter 21B, a cross-correlation calculation section 22B, a phase difference distribution calculation section 23B, a sound source detection section 24B, a sound source frequency component calculation section 25B, a sound source frequency component filter 26B, a phase difference change calculation section 27B, a sound pressure change calculation section 28B, a movement direction determination section 29B, and an approaching vehicle determination section 30B).

The sound collector array 10B has the left side sound collector unit 11B and the right side sound collector unit 12B. The left side sound collector unit 11B and the right side sound collector unit 12B are disposed, as shown in FIG. 6, on the left side and the right side of the front end of the vehicle in the vehicle width direction (the right-left direction) at the same height, and the outer sound collectors are disposed on the outer sides to be placed at the corners of the vehicle. Consequently, the spacing between the left side sound collector unit 11B and the right side sound collector unit 12B is wider than the spacing of the arrangement of the approaching vehicle detection device 1A.

The left side sound collector unit 11B has the first sound collector 13B and the second sound collector 14B. The first sound collector 13B is disposed at the corner (outermost end) on the left side in the vehicle width direction. The second sound collector 14B is disposed close to the center of the vehicle at a predetermined spacing from the first sound collector 13B. The right side sound collector unit 12B has the third sound collector 15B and the fourth sound collector 16B. The fourth sound collector 16B is disposed at the corner (outermost end) on the right side in the vehicle width direction. The third sound collector 15B is disposed close to the center of the vehicle at a predetermined spacing from the fourth sound collector 16B. The spacing between the sound collectors in each of the sound collector units 11B and 12B is set to be narrow, whereby it is possible to enhance the noise resistance performance as the spacing is narrow. The sound collectors 13B, 14B, 15B, and 16B are the same as the sound collectors 13A, 14A, 15A, and 16A according to the first embodiment.

As described above, when the sound collectors 13B, 14B, 15B, and 16B are disposed, it is easy for the sound collectors 13B and 16B, which are disposed at the corners of the vehicle, to receive an input of the sound from the rear side of the vehicle. However, since the vehicle body itself serves as a sound insulation object, it is difficult for the sound collectors 14B and 15B, which are disposed to be closer to the vehicle center than the corners of the vehicle, to receive an input of the sound from the rear side of the vehicle. Consequently, when the sound source is detectable only through the sound source detection using the pair of the sound collectors of the first sound collector 13B and the fourth sound collector 16B, it can be determined that the sound source is present on the rear side. In addition, when the sound source is detectable through both the sound source detection using the pair of the sound collectors of the first sound collector 13B and the fourth sound collector 16B and the sound source detection using the pair of the sound collectors of the second sound collector 14B and the third sound collector 15B, it can be determined that the sound source is present on the front side.

The ECU 20B is an electronic control unit formed of a CPU, a ROM, a RAM, and the like, and integrally controls the approaching vehicle detection device 1B. In the ECU 20B, approaching vehicle detecting applications stored in the ROM are loaded onto the RAM, and are executed by the CPU. The ECU 20B includes the filter 21B, the cross-correlation calculation section 22B, the phase difference distribution calculation section 23B, the sound source detection section 24B, the sound source frequency component calculation section 25B, the sound source frequency component filter 26B, the phase difference change calculation section 27B, the sound pressure change calculation section 28B, the movement direction determination section 29B, and the approaching vehicle determination section 30B. In addition, in the ECU 20B, the electric signals are respectively input from the first sound collector 13B, the second sound collector 14B, the third sound collector 15B, and the fourth sound collector 16B, whereby processes of the filters 21B and 26B and the processing sections 22B, 23B, 24B, 25B, 27B, 28B, 29B, and 30B are performed using the electric signals at predetermined time intervals.

The filter 21B performs the same filtering as the filter 21A according to the first embodiment. The cross-correlation calculation section 22B performs the same process as the cross-correlation calculation section 22A according to the first embodiment. The phase difference distribution calculation section 23B performs the same process as the phase difference distribution calculation section 23A according to the first embodiment. The sound source detection section 24B performs the same process as the sound source detection section 24A according to the first embodiment. The sound source frequency component filter 26B performs the same filtering as the sound source frequency component filter 26A according to the first embodiment. The phase difference change calculation section 27B performs the same process as the phase difference change calculation section 27A according to the first embodiment. The sound pressure change calculation section 28B performs the same process as the sound pressure change calculation section 28A according to the first embodiment.

The sound source frequency component calculation section 25B performs not only the same process as the sound source frequency component calculation section 25A according to the first embodiment, but also the following process. The sound source frequency component calculation section 25B calculates the frequency component of the sound source in which the correlation between the electric signal of the first sound collector 13B and the electric signal of the fourth sound collector 16B each filtered by the filter 21B is high. Further, the sound source frequency component calculation section 25B calculates the frequency component of the sound source in which the correlation between the electric signal of the second sound collector 14B and the electric signal of the third sound collector 15B each filtered by the filter 21B is high. Here, under the premise that there is a sound source approaching in the front-rear direction, the above-mentioned process is performed.

The movement direction determination section 29B performs not only the same process as the movement direction determination section 29A according to the first embodiment, but also the following process. If it is determined that the vehicle approaches in the front-rear direction, the movement direction determination section 29B compares the frequency component of the sound source, in which the correlation between the electric signal of the first sound collector 13B and the electric signal of the fourth sound collector 16B is high, with the frequency component of the sound source, in which the correlation between the electric signal of the second sound collector 14B and the electric signal of the third sound collector 15B is high, the frequency components being calculated by the sound source frequency component calculation section 25B, and determines whether or not the frequency components are the same. Then, the movement direction determination section 29B determines that the vehicle approaches from the front side if the frequency components are the same, and determines that the vehicle approaches from the rear side if the frequency components are different.

The approaching vehicle determination section 30B performs not only the same process as the approaching vehicle determination section 30A according to the first embodiment, but also the following process. The approaching vehicle determination section 30B determines whether the vehicle approaching in the front-rear direction approaches from the front direction or approaches from the rear direction, on the basis of the determination result of the movement direction determination section 29B.

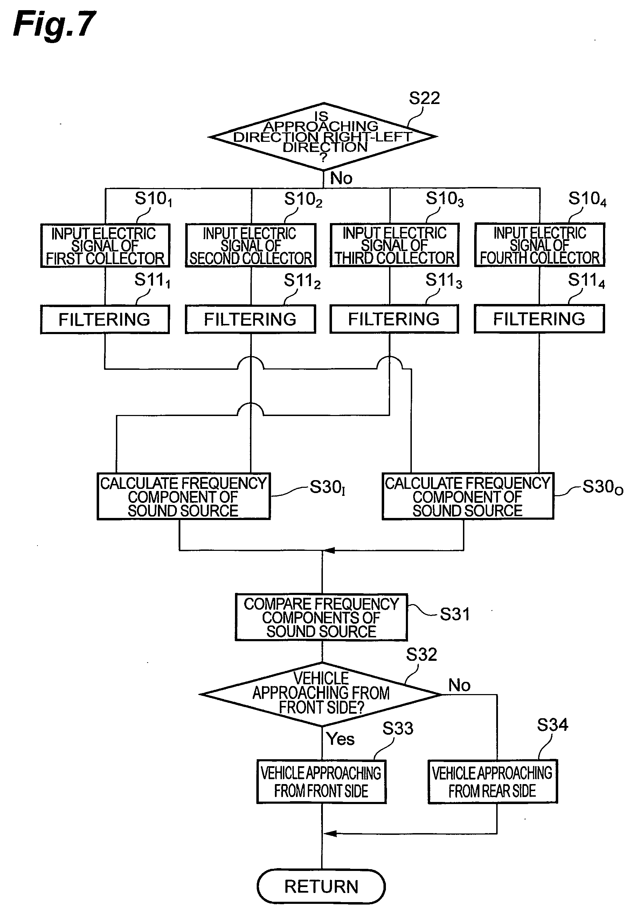

Next, referring to FIGS. 1 and 6, the operation of the approaching vehicle detection device 1B will be described. In particular, the process of the ECU 20B will be described in accordance with the flowchart of FIG. 7. FIG. 7 is a flowchart illustrating flow of the process in the ECU of the approaching vehicle detection device according to the second embodiment.

The approaching vehicle detection device 1B performs all the operations of the approaching vehicle detection device 1A described in the first embodiment, and determines the movement direction of the vehicle approaching in the front-rear direction. Therefore, the operation of the determination as to the movement direction of the vehicle approaching in the front-rear direction will be described. Here, in S22 of the flowchart of FIG. 5 in the first embodiment, if the result of "the determination as to whether or not the vehicle approaches in the right-left direction" is "No", a process subsequent thereto will be described.

In a similar manner to the description of the first embodiment, when an electric signal is input from the first sound collector 13B (S101), the electric signal is filtered by the filter 21 B (S111). When an electric signal is input from the second sound collector 14B (S102), the electric signal is filtered by the filter 21B(S112). When an electric signal is input from the third sound collector 15B (S103), the electric signal is filtered by the filter 21B (S113). When an electric signal is input from the fourth sound collector 16B (S104), the electric signal is filtered by the filter 21B (S114).

If it is determined that the direction of the approach is not the right-left direction in the determination of S22, the sound source frequency component calculation section 25B of the ECU 20B calculates the frequency component of the sound source in which the correlation between the filtered electric signal of the second sound collector 14B and the filtered electric signal of the third sound collector 15B is high (S30I). Here, the frequency component of the sound source detected by the pair of the inner sound collectors is extracted, and a plurality of frequency components of the sound sources may be extracted. Further, the sound source frequency component calculation section 25B of the ECU 20B calculates the frequency component of the sound source in which the correlation between the filtered electric signal of the first sound collector 13B and the filtered electric signal of the fourth sound collector 16B is high (S30O). Here, the frequency component of the sound source detected by the pair of the sound collectors at the corners is extracted, and a plurality of frequency components of the sound sources may be extracted.

Then, the movement direction determination section 29B of the ECU 20B compares the extracted frequency component of the pair of the sound collectors at the corners with the extracted frequency component of the pair of the inner sound collectors (S31), and determines whether or not the vehicle approaches from the front side (that is, whether the frequency components are different or the same) (S32). If it is determined that the frequency components are the same in the determination of S32, the approaching vehicle determination section 30B of the ECU 20B determines that the vehicle approaches from the front side (S33). If it is determined that the frequency components are different in the determination of S32, the approaching vehicle determination section 30B of the ECU 20B determines that the vehicle approaches from the rear side (S34).

The ECU 20B generates the approaching vehicle information including the determination results, and transmits the approaching vehicle information to the driving support device 2. The ECU 20B repeatedly performs the process.

The approaching vehicle detection device 1B not only has the same advantages as the approaching vehicle detection device 1A according to the first embodiment, but also has the following advantages. According to the approaching vehicle detection device 1B, the outer sound collectors 13B and 16B are disposed at the corners of the front end of the vehicle, and the frequency component of the sound source detected by the pair of the sound collectors 13B and 16B at the corners is compared with the frequency component of the sound source detected by the pair of the inner sound collectors 14B and 15B, whereby it is possible to determine whether the vehicle approaching in the front-rear direction approaches from the front side or approaches from the rear side.

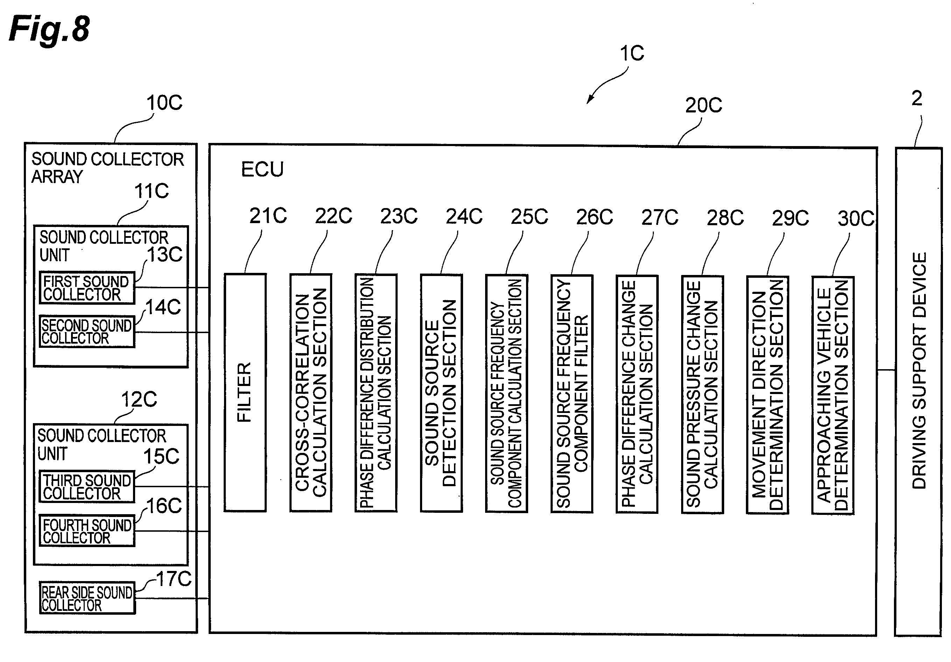

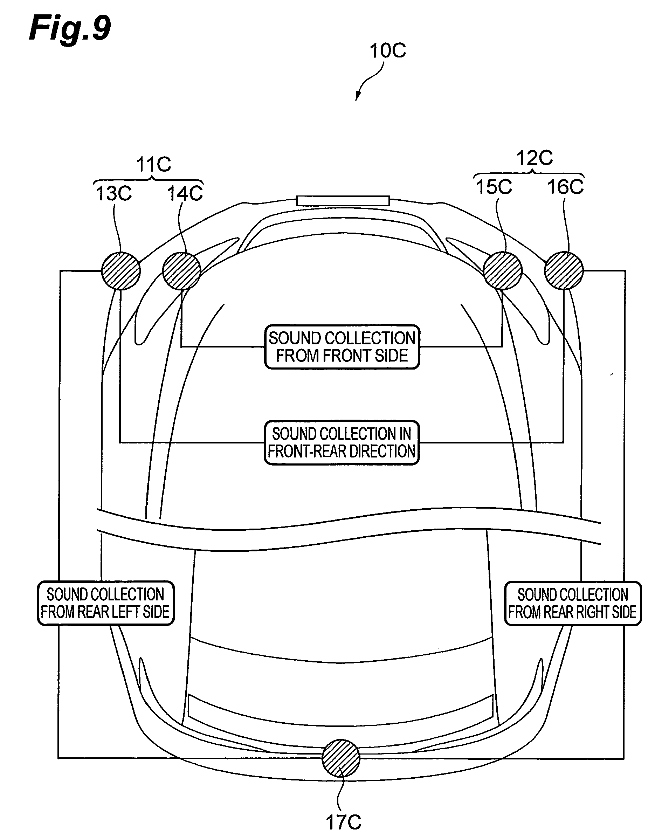

Referring to FIGS. 8 and 9, the approaching vehicle detection device 1C according to the third embodiment will be described. FIG. 8 is a configuration diagram of an approaching vehicle detection device according to a third embodiment. FIG. 9 is a diagram of arrangement of the sound collectors of the approaching vehicle detection device according to the third embodiment.

The approaching vehicle detection device 1C is able to determine whether the vehicle approaches from the just rear side or the vehicle approaches from the rear left side or the vehicle approaches from the rear right side if there is a vehicle approaching from the rear direction, compared with the approaching vehicle detection device 1B according to the second embodiment. In the approaching vehicle detection device 1C, the four sound collectors are disposed at the front end of the vehicle in the same arrangement as the approaching vehicle detection device 1B, and one sound collector is disposed at the rear end of the vehicle. Then, the approaching vehicle detection device 1C performs not only the process of detecting the approaching vehicle in the approaching vehicle detection device 1B, but also the determination as to whether the sound source is from the just rear side, from the rear left side, or from the rear right side if there is a vehicle approaching from the rear direction.

The approaching vehicle detection device 1C includes a sound collector array 10C (a left side sound collector unit 11C (a first sound collector 13C and a second sound collector 14C), a right side sound collector unit 12C (a third sound collector 15C and a fourth sound collector 16C), and a rear side sound collector 17C) and an ECU 20C (a filter 21C, a cross-correlation calculation section 22C, a phase difference distribution calculation section 23C, a sound source detection section 24C, a sound source frequency component calculation section 25C, a sound source frequency component filter 26C, a phase difference change calculation section 27C, a sound pressure change calculation section 28C, a movement direction determination section 29C, and an approaching vehicle determination section 30C).

The sound collector array 10C not only has the left side sound collector unit 11C and the right side sound collector unit 12C but also the rear side sound collector 17C. The left side sound collector unit 11C and the right side sound collector unit 12C are configured, as shown in FIG. 9, similarly to the left side sound collector unit 11B and the right side sound collector unit 12B according to the second embodiment.

The rear side sound collector 17C is disposed at the center in the vehicle width direction at the rear end of the vehicle as shown in FIG. 9. The rear side sound collector 17C is an omnidirectional sound collector, and collects ambient sounds outside the vehicle. The rear side sound collector 17C is an acoustic-electric converter, converts a collected sound to an electric signal, and transmits the electric signal to the ECU 20C.

As described above, when the sound collectors 13C, 14C, 15C, 16C, and 17C are disposed, if there is a sound source on the rear left side, it is easy to detect the sound source through the pair of the sound collectors of the rear side sound collector 17C on the rear side and the first sound collector 13C at the left corner on the front side, but it is difficult to detect the sound source through the pair of the sound collectors of the rear side sound collector 17C on the rear side and the fourth sound collector 16C at the right corner on the front side. Further, if there is a sound source on the rear right side, it is easy to detect the sound source through the pair of the sound collectors of the rear side sound collector 17C on the rear side and the fourth sound collector 16C at the right corner on the front side, but it is difficult to detect the sound source through the pair of the sound collectors of the rear side sound collector 17C on the rear side and the first sound collector 13C at the left corner on the front side. Accordingly, it is possible to determine the sound source on the rear left side by using the pair of the sound collectors of the rear side sound collector 17C and the first sound collector 13C, and it is possible to determine the sound source on the rear right side by using the pair of the sound collectors of the rear side sound collector 17C and the fourth sound collector 16C. Furthermore, when it is possible to detect the sound pressure changes of which the levels are the same between the first sound collector 13C and the fourth sound collector 16C at the right and left ends on the front side, it is possible to determine the sound source on the just rear side by using the pair of the sound collectors of the first sound collector 13C and the fourth sound collector 16C.

The ECU 20C is an electronic control unit formed of a CPU, a ROM, a RAM, and the like, and integrally controls the approaching vehicle detection device 1C. In the ECU 20C, approaching vehicle detecting applications stored in the ROM are loaded onto the RAM, and are executed by the CPU. The ECU 20C includes the filter 21C, the cross-correlation calculation section 22C, the phase difference distribution calculation section 23C, the sound source detection section 24C, the sound source frequency component calculation section 25C, the sound source frequency component filter 26C, the phase difference change calculation section 27C, the sound pressure change calculation section 28C, the movement direction determination section 29C, and the approaching vehicle determination section 30C. In addition, in the ECU 20C, the electric signals are respectively input from the first sound collector 13C, the second sound collector 14C, the third sound collector 15C, the fourth sound collector 16C, and the rear side sound collector 17C, whereby processes of the filters 21C and 26C and the processing sections 22C, 23C, 24C, 25C, 27C, 28C, 29C, and 30C are performed using the electric signals at predetermined time intervals.

The phase difference distribution calculation section 23C performs the same process as the phase difference distribution calculation section 23B according to the second embodiment. The sound source detection section 24C performs the same process as the sound source detection section 24B according to the second embodiment. The sound source frequency component calculation section 25C performs the same process as the sound source frequency component calculation section 25B according to the second embodiment. The sound source frequency component filter 26C performs the same filtering as the sound source frequency component filter 26B according to the second embodiment. The sound pressure change calculation section 28C performs the same process as the sound pressure change calculation section 28B according to the second embodiment.

The filter 21C performs not only the same filtering as the filter 21B according to the second embodiment, but also the following filtering. The filter 21C removes a high frequency band, which is higher than a band including the full frequency band of the traveling sound of the vehicle, and a low frequency band, which is lower than that, from the electric signal whenever the electric signal is input from the rear side sound collector 17C.

The cross-correlation calculation section 22C performs not only the same process as the cross-correlation calculation section 22B according to the second embodiment, but also the following process. The cross-correlation calculation section 22C calculates the cross-correlation value between the electric signals of the two sound collectors 13C and 16C filtered by the filter 21C, for the pair of the sound collectors of the first sound collector 13C and the fourth sound collector 16C. Further, the cross-correlation calculation section 22C calculates the cross-correlation value between the electric signals of the two sound collectors 13C and 17C filtered by the filter 21C, for the pair of the sound collectors of the first sound collector 13C and the rear side sound collector 17C. Furthermore, the cross-correlation calculation section 22C calculates the cross-correlation value between the electric signals of the two sound collectors 16C and 17C filtered by the filter 21C, for the pair of the sound collectors of the fourth sound collector 16C and the rear side sound collector 17C.

The phase difference change calculation section 27C performs not only the same process as the phase difference change calculation section 27B according to the second embodiment, but also the following process. When the cross-correlation calculation section 22C calculates the cross-correlation between the electric signals for the pair of the sound collectors of the first sound collector 13C and the fourth sound collector 16C, the phase difference change calculation section 27C calculates the temporal change in the phase difference of the sound source by using the phase differences calculated for each predetermined time interval. Further, when the cross-correlation calculation section 22C calculates the cross-correlation between the electric signals for the pair of the sound collectors of the first sound collector 13C and the rear side sound collector 17C, the phase difference change calculation section 27C calculates the temporal change in the phase difference of the sound source by using the phase differences calculated for each predetermined time interval. Furthermore, when the cross-correlation calculation section 22C calculates the cross-correlation between the electric signals for the pair of the sound collectors of the fourth sound collector 16C and the rear side sound collector 17C, the phase difference change calculation section 27C calculates the temporal change in the phase difference of the sound source by using the phase differences calculated for each predetermined time interval.

The movement direction determination section 29C performs not only the same process as the movement direction determination section 29C according to the second embodiment, but also the following process. If it is determined that the vehicle approaches from the rear direction, the movement direction determination section 29C determines whether or not the vehicle approaches from the just rear side, on the basis of the temporal change in the phase difference between the electric signal of the first sound collector 13C and the electric signal of the fourth sound collector 16C and the temporal changes in the sound pressures. Here, if the phase difference is continuously at zero (or approximately zero) and both the sound pressure of the first sound collector 13C and the sound pressure of the fourth sound collector 16C increase, it is determined that the vehicle approaches from the just rear side. When the vehicle does not approach from the just rear side, the movement direction determination section 29C compares the temporal change in the phase difference between the electric signal of the first sound collector 13C and the electric signal of the rear side sound collector 17C with the temporal change in the phase difference between the electric signal of the fourth sound collector 16C and the electric signal of the rear side sound collector 17C, and determines whether the vehicle approaches from the rear left side or the vehicle approaches from the rear right side. Here, when the phase difference between the electric signal of the first sound collector 13C and the electric signal of the rear side sound collector 17C decreases, it is determined that the vehicle approaches from the rear left side. When the phase difference between the electric signal of the fourth sound collector 16C and the electric signal of the rear side sound collector 17C decreases, it is determined that the vehicle approaches from the rear right side. Further, when both the phase difference between the electric signal of the first sound collector 13C and the electric signal of the rear side sound collector 17C and the phase difference between the electric signal of the fourth sound collector 16C and the electric signal of the rear side sound collector 17C decrease, it is determined that a vehicle approaches from the rear left side and a vehicle approaches from the rear right side.

The approaching vehicle determination section 30C performs not only the same process as the approaching vehicle determination section 30B according to the second embodiment, but also the following process. The approaching vehicle determination section 30C determines whether the vehicle approaching on the rear side approaches from the just rear side, on the basis of the determination result of the movement direction determination section 29C. If the vehicle does not approach from the just rear side, the approaching vehicle determination section 30C determines whether the vehicle approaching from the rear side approaches from the rear left side or from the rear right side, on the basis of the determination result of the movement direction determination section 29C.

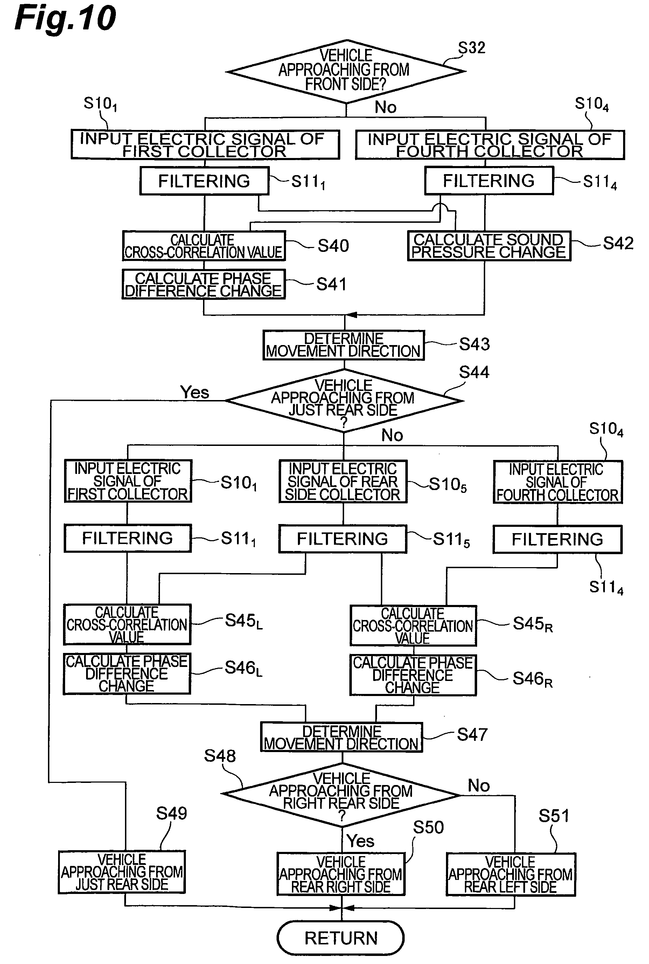

Next, referring to FIGS. 8 and 9, the operation of the approaching vehicle detection device 1C will be described. In particular, the process of the ECU 20C will be described in accordance with the flowchart of FIG. 10. FIG. 10 is a flowchart illustrating flow of the process in the ECU of the approaching vehicle detection device according to the third embodiment.

The approaching vehicle detection device 1C performs all the operations of the approaching vehicle detection device 1B described in the second embodiment, and determines the movement direction of the vehicle approaching from the rear side. Therefore, the operation of the determination as to the movement direction of the vehicle approaching from the rear side will be described. Here, in S32 of the flowchart of FIG. 7 in the second embodiment, if the result of "the determination as to whether or not the vehicle approaches from the front side" is "No", a process subsequent thereto will be described.

In a similar manner to the description of the first embodiment, when an electric signal is input from the first sound collector 13C (S101), the electric signal is filtered by the filter 21C (S111). When an electric signal is input from the fourth sound collector 16C (S104), the electric signal is filtered by the filter 21C (S114). Further, in the case of the approaching vehicle detection device 1C, when an electric signal is input from the rear side sound collector 17C (S105), the electric signal is filtered by the filter 21C (S115).

If it is determined that the vehicle approaching in the front-rear direction does not approach from the front side in the determination of S32, the cross-correlation calculation section 22C of the ECU 20C calculates the cross-correlation value between the filtered electric signal of the first sound collector 13C and the filtered electric signal of the fourth sound collector 16C (S40), and the phase difference change calculation section 27C calculates the temporal change in the phase difference (S41). Further, the sound pressure change calculation section 28C of the ECU 20C calculates the temporal changes in the sound pressures from the filtered electric signal of the first sound collector 13C and the filtered electric signal of the fourth sound collector 16C (S42).

The movement direction determination section 29C of the ECU 20C determines whether or not the vehicle approaching from the rear side approaches from the just rear side, on the basis of the temporal change in the phase difference between the electric signals of the first sound collector 13C and the fourth sound collector 16C and the temporal changes in the sound pressures (S43). Then, the approaching vehicle determination section 30C of the ECU 20C determines whether or not the vehicle approaching from the rear side approaches from the just rear side, on the basis of the determination result (S44). If it is determines that the vehicle approaches from the just rear side in the determination of S44, the ECU 20C determines that the vehicle approaches from the just rear side (S49).

If it is determined that the vehicle does not approach from the just rear side in the determination of S44, the cross-correlation calculation section 22C of the ECU 20C calculates the cross-correlation value between the filtered electric signal of the first sound collector 13C and the filtered electric signal of the rear side sound collector 17C (S45L), and the phase difference change calculation section 27C calculates the temporal change in the phase difference (S46L). Further, the cross-correlation calculation section 22C of the ECU 20C calculates the cross-correlation value between the filtered electric signal of the fourth sound collector 16C and the filtered electric signal of the rear side sound collector 17C (S45R), and the phase difference change calculation section 27C calculates the temporal change in the phase difference (S46R).

The movement direction determination section 29C of the ECU 20C determines whether the vehicle approaching from the rear side approaches from the left direction or approaches from the rear right side, on the basis of the temporal change in the phase difference between the electric signals of the first sound collector 13C and the rear side sound collector 17C and the temporal change in the phase difference between the electric signals of the fourth sound collector 16C and the rear side sound collector 17C (S47). Then, the approaching vehicle determination section 30C of the ECU 20C determines that the vehicle approaches from the rear right side, on the basis of the determination result (S48). If it is determined that the vehicle approaches from the rear right side in the determination of S48, the approaching vehicle determination section 30C of ECU 20C determines that the vehicle approaches from the rear right side (S50). In contrast, if it is determined that the vehicle does not approach from the rear right side in the determination of S48, the approaching vehicle determination section 30C of the ECU 20C determines that the vehicle approaches from the rear left side (S51).

The ECU 20C generates the approaching vehicle information including the determination results, and transmits the approaching vehicle information to the driving support device 2. The ECU 20C repeatedly performs the process.

The approaching vehicle detection device 1C not only has the same advantages as the approaching vehicle detection device 1B according to the second embodiment, but also has the following advantages. According to the approaching vehicle detection device 1C, the sound collector 17C is also disposed on the rear side, and the movement direction of the approaching vehicle on the rear side is determined by using the pair of the sound collectors of the first sound collector 13C at the front left corner and the fourth sound collector 16C at the front right corner and the pair of the sound collectors of the rear side sound collector 17C and the first sound collector 13C at the front left corner, and the pair of the sound collectors of the rear side sound collector 17C and the fourth sound collector 16C at the front right corner. Thereby, it is possible to determine whether the vehicle approaches from the just rear side, the vehicle approaches from the rear left side, or the vehicle approaches from the rear right side. As described above, by determining the movement direction of the vehicle approaching from the rear side, it is possible to provide useful information when changing lanes of the host vehicle.

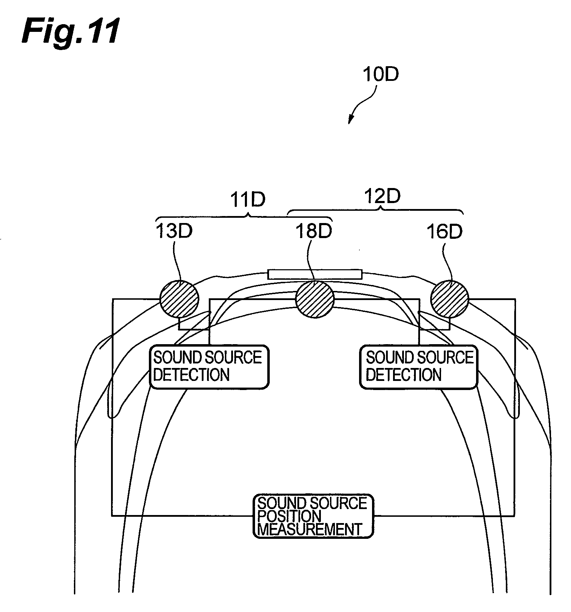

Referring to FIG. 11, description will be given of a sound collector array 10D as a variation of arrangement of the sound collectors of an approaching vehicle detection device according to a fourth embodiment. FIG. 11 is a diagram of the arrangement of the sound collectors of the approaching vehicle detection device according to the fourth embodiment.

The sound collector array 10D has three sound collectors of a first sound collector 13D, a fourth sound collector 16D, and a center sound collector 18D, and the first sound collector 13D, the fourth sound collector 16D, and the center sound collector 18D are arranged along the vehicle width direction at the same height as the front end of the vehicle. The first sound collector 13D is disposed on the left side in the vehicle width direction at the front end of the vehicle. The fourth sound collector 16D is disposed on the right side in the vehicle width direction at the front end of the vehicle. The center sound collector 18D is disposed at the center in the vehicle width direction at the front end of the vehicle. The spacing between the first sound collector 13D and the center sound collector 18D and the spacing between the fourth sound collector 16D and the center sound collector 18D are the same.

The first sound collector 13D and the center sound collector 18D constitute the left side sound collector unit of the first embodiment or the like, and the fourth sound collector 16D and the center sound collector 18D constitute the right side sound collector unit of the first embodiment or the like. Each sound collector unit detects a sound source in a similar manner to the first embodiment or the like. Further, by using the pair of the sound collectors of the first sound collector 13D and the fourth sound collector 16D, the determination as to the movement direction of the sound source (position measurement of the sound source) is performed in a similar manner to the first embodiment.

For example, when the sound collector array 10D according to the fourth embodiment is used to be applied to the process of detecting the approaching vehicle in the approaching vehicle detection device according to the first embodiment 1, each process is performed by using the electric signal of the center sound collector 18D instead of the electric signal of the second sound collector 14A and the electric signal of the third sound collector 15A according to the first embodiment.

According to the approaching vehicle detection device 1D, by using a minimum number of the sound collectors of the three sound collectors 13D, 16D, and 18D, it is possible to obtain the same advantages as the approaching vehicle detection device 1A according to the first embodiment.

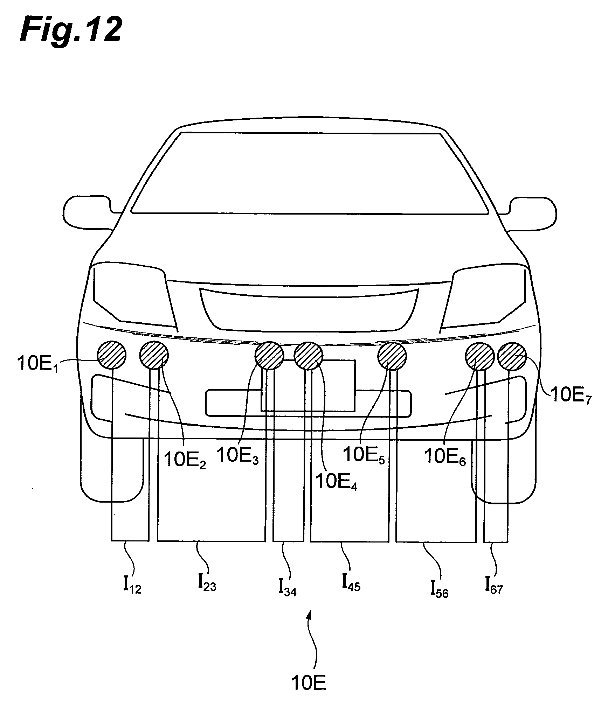

Referring to FIG. 12, description will be given of a sound collector array 10E as a variation of arrangement of the sound collectors of an approaching vehicle detection device according to a fifth embodiment. FIG. 12 is a diagram of spacings and arrangement of sound collectors of an approaching vehicle detection device according to a fifth embodiment.

As described in the above embodiment, when detecting the sound source from the pair of the sound collectors with the narrow spacing and measuring the position of the sound source from the pair of the sound collectors with the wide spacing, three or more sound collectors are necessary. Further, generally, since the sound has a periodic waveform, if the period of the sound coincides with or is a multiple of the spacing between the pair of the sound collectors, the phase difference between the electric signals of the pair of the sound collectors may be erroneously detected. In this case, the sound source detection performance is lowered. The period of the sound changes variously in accordance with conditions, and therefore it is difficult to anticipate the period in advance. Thus, by providing a plurality of spacings as the spacings between the pairs of the sound collectors, even when one spacing between the pair of the sound collectors has an inappropriate relationship with the period of the sound, other spacings between the pairs of the sound collectors have an appropriate relationship with the period of the sound. Consequently, multiple spacings between the pairs of the sound collectors may be provided.

Accordingly, the fifth embodiment describes an example of the sound collector array 10E having seven sound collectors 10E1 to 10E7. The sound collectors 10E1 to 10E7 of the sound collector array 10E are randomly arranged in the vehicle width direction at the same height at the front end of the vehicle, and all spacings I12, I23, I34, I45, I56, and I67 between adjacent sound collectors are set to be different. As described above, not only the spacing between the adjacent sound collectors but also the spacing between the different multiple pairs of the sound collectors can be set by arbitrarily selecting two sound collectors. It should be noted that, in the example, the sound collector array has seven sound collectors, but the sound collector array may have a different number of sound collectors.

For example, when the sound collector array 10E according to the fifth embodiment is used to be applied to the process of detecting the approaching vehicle in the approaching vehicle detection device according to the first embodiment 1, the two pairs of the sound collectors between which the spacings are narrow are sequentially selected from the seven sound collectors 10E1 to 10E7 as the pairs of the sound collectors with the narrow spacings according to the first embodiment for each process, the pairs of the two sound collectors between which the spacing is wide is selected from the seven sound collectors 10E1 to 10E7 as the pair of the sound collectors with the wide spacing, and the processes are performed by using the electric signals of selected pairs of the sound collectors.

A different detection method may be used as the method of detecting the approaching vehicle by detecting the sound source from the pair of the sound collectors with the narrow spacing and measuring the position of the sound source from the pair of the sound collectors with the wide spacing. For example, by performing the processes through the pairs of the sound collectors of various combinations of the sound collectors 10E1 to 10E7 included in the sound collector array 10E, the information pieces (for example, the cross-correlation, the phase difference, and the sound pressure) detected by the pairs of the sound collectors are averaged, and the movement direction of the sound source (approaching vehicle) is determined on the basis of the averaged information. In the case of the detection method, as combinations of the pair of the sound collectors with the narrow spacing and the pair of the sound collectors with the wide spacing increase, the detection performance improves. However, the processing load also increases, and thus the number of combinations of the pairs of the sound collectors used in the process is determined in consideration of the balance therebetween.

The approaching vehicle detection device 1E not only has the same advantages as the approaching vehicle detection device 1A according to the first embodiment, but also has the following advantages. According to the approaching vehicle detection device 1E, regardless of the period of the sound, it is possible to detect the sound source (approaching vehicle), and it is possible to enhance the detection performance.

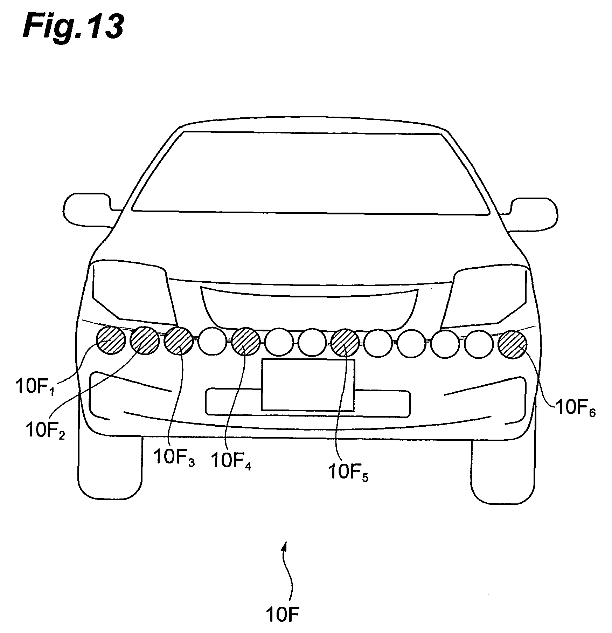

Referring to FIG 13, description will be given of a sound collector array 10F as a variation of arrangement of the sound collectors of an approaching vehicle detection device according to a sixth embodiment. FIG. 13 is a diagram of the arrangement of the sound collectors of the approaching vehicle detection device according to the sixth embodiment.

In order to obtain various spacings as the sound collector spacings, it is necessary to provide multiple sound collectors. However, in view of costs, restriction based on the vehicle structure, and the design thereof, a small number of sound collectors is preferable. Accordingly, it is preferable to obtain more numerous sound collector spacings with a small number of sound collectors.

Therefore, the sixth embodiment describes an example of the sound collector array 10F having six sound collectors 10F1 to 10F6 using spacings specified by the Fibonacci series. The sequence (Fibonacci sequence), which is specified by the Fibonacci series, is a sequence which starts from 0, 1 like 0, 1, 1, 2, 3, 5, 8, 13, 21, 34, 55, 89, 144, 233, 377, 610, 987···, where the sum of the previous two numbers is set as a new number. By placing the sound collectors in accordance with the sequence, more numerous sound collector spacings can be obtained with a small number of sound collectors.

The sound collectors 10F1 to 10F6 of the sound collector array 10F are disposed at the positions of 1, 2, 3, 5, 8, 13 (a part of the Fibonacci sequence) in the vehicle width direction at the same height at the front end of the vehicle. That is, as shown in FIG. 13, the positions are set using thirteen circular marks arranged along the vehicle width direction at the same height at the front end of the vehicle, and all the spacings between the positions of the circular marks adjacent to each other are set to be the same. Among the thirteen positions, the sound collector 10F1 is disposed at the right end position of the vehicle, the sound collector 10F2 is disposed at the second position from the right end, the sound collector 10F3 is disposed at the third position from the right end, the sound collector 10F4 is disposed at the fifth position from the right end, the sound collector 10F5 is disposed at the eighth position from the right end, and the sound collector 10F6 is disposed at the thirteenth (left end) position from the right end. It should be noted that, in the example, the sound collector array has the six sound collectors, but the sound collector array may have a different number of sound collectors.

In the exemplary case, assuming that the spacing between the adjacent sound collectors is L, the spacing between the pair of the sound collectors of the sound collector 10F1 and the sound collector 10F2 (or the spacing between the pair of the sound collectors of the sound collector 10F2 and the sound collector 10F3) is 1×L, the spacing between the pair of the sound collectors of the sound collector 10F1 and the sound collector 10F3 (or the pair of the sound collectors of the sound collector 10F3 and sound collector 10F4 or the like) is 2xL, and the spacing between the pair of the sound collectors of the sound collector 10F2 and the sound collector 10F4 is 3xL. As described above, the six sound collectors 10F1 to 10F6 constitute various combinations of the pairs of the sound collectors, whereby it is possible to generate eleven spacings of 1×L to 12×L as the spacing between the pair of the sound collectors (it is not possible to generate only 9xL).

In addition, by using the sound collector array 10F according to the sixth embodiment, the process of detecting the approaching vehicle is performed as described in the fifth embodiment.

The approaching vehicle detection device 1F not only has the same advantages as the approaching vehicle detection device 1E according to the fifth embodiment, but also has the following advantages. According to the approaching vehicle detection device 1F, the sound collectors are arranged using the Fibonacci sequence, whereby it is possible to obtain more numerous sound collector spacings with a small number of sound collectors.

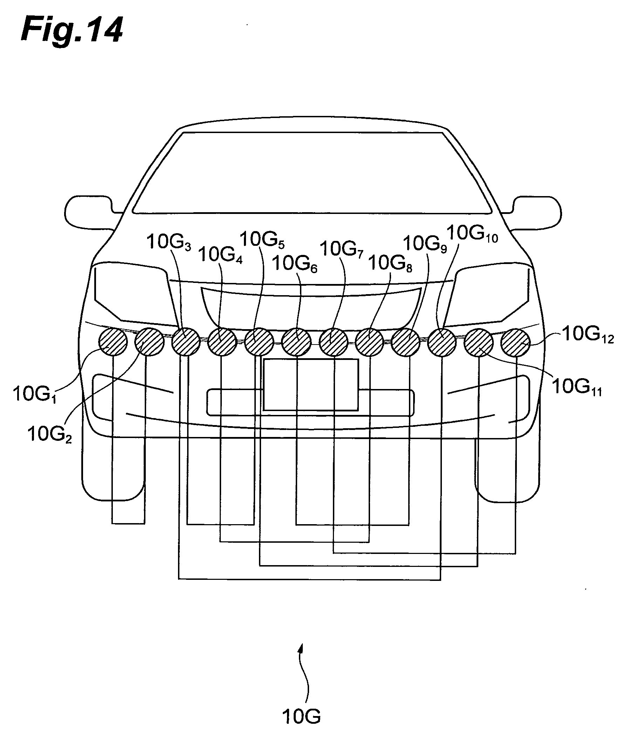

Referring to FIG. 14, description will be given of a sound collector array 10G as a variation of arrangement of the sound collectors of an approaching vehicle detection device according to a seventh embodiment. FIG. 14 is a diagram of the spacings and the arrangement of the sound collectors of the approaching vehicle detection device according to the seventh embodiment.

In the sound collector array according to the fifth and sixth embodiment, the sound collector spacings are randomly set. However, even when all the sound collector spacings are set to be the same, it is possible to form various sound collector spacings on the basis of the combinations of the sound collectors constituting the pairs of the sound collectors. In this case, it is possible to obtain the same advantages as the case of using the sound collector array in which the sound collectors are randomly spaced.

In the seventh embodiment, the seventh embodiment describes an example of the sound collector array 10G having twelve sound collectors 10G1 to 10G12. The sound collectors 10G1 to 10G12 of the sound collector array 10G are arranged to be regularly spaced in the vehicle width direction at the same height at the front end of the vehicle. Even when the collectors are arranged to be regularly spaced in such a manner, assuming that the spacing between the adjacent sound collectors is L, for example, the spacing between the pair of the sound collectors of the sound collector 10G1 and the sound collector 10G2 is 1 xL, the spacing between the pair of the sound collectors of the sound collector 10G3 and the sound collector 10G5 is 2xL, the spacing between the pair of the sound collectors of the sound collector 10G6 and the sound collector 10G9 is 3xL, the spacing between the pair of the sound collectors of the sound collector 10G4 and the sound collector 10G8 is 4xL, the spacing between the pair of the sound collectors of the sound collector 10G7 and the sound collector 10G12 is 5×L, the spacing between the pair of the sound collectors of the sound collector 10G5 and the sound collector 10G11 is 6xL, the spacing between the pair of the sound collectors of the sound collector 10G3 and the sound collector 10G10 is 7xL, and the spacings are different from one another.

In addition, by using the sound collector array 10G according to the seventh embodiment, the process of detecting the approaching vehicle is performed as described in the above-mentioned embodiment while the combination of the selected pairs of the sound collectors is changed for each single process. By changing the combination of the selected pairs of the sound collectors for each single process, even when noise occurs for a predetermined time, it is possible to reduce the effect thereof.

The approaching vehicle detection device 1G not only has the same advantages as the approaching vehicle detection device 1E according to the fifth embodiment, but also has the following advantages. According to the approaching vehicle detection device 1G, by changing the combination of the selected pairs of the sound collectors for each single process, it is possible to further enhance the noise resistance performance.

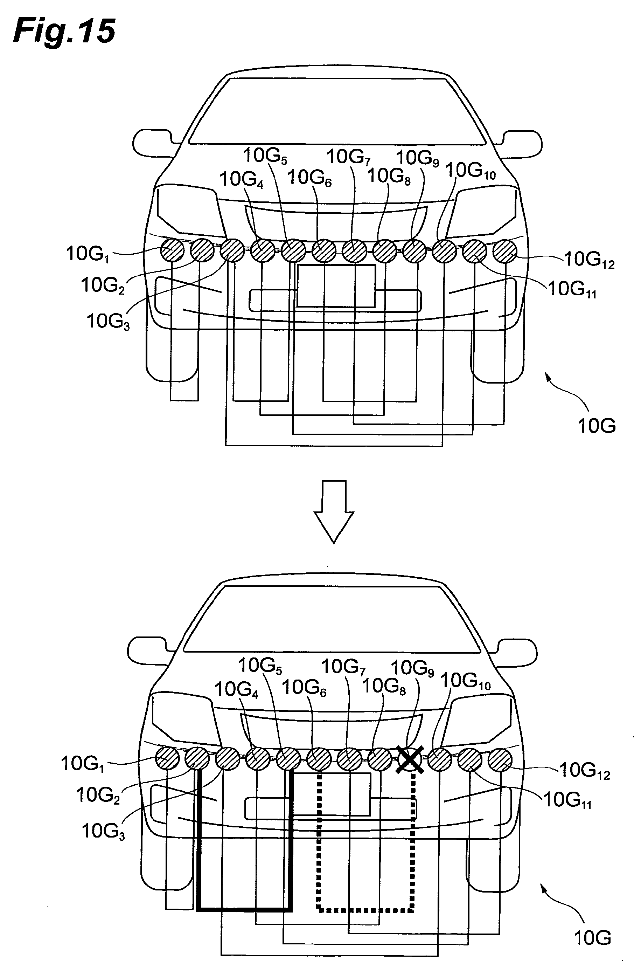

Referring to FIG. 15, a method of coping with the case where there are sound collectors inappropriate for the process among the sound collectors included in the sound collector array 10G of the approaching vehicle detection device according to the seventh embodiment will be described. It should be noted that inappropriate sound collector means, for example, the faulty sound collector. FIG. 15 is an example of the sound collector spacings in the case where some sound collectors of the approaching vehicle detection device according to the seventh embodiment are faulty.

As the coping method, the approaching vehicle detection device has a fault determination section in the ECU, and provides a sound generation device that generates a reference sound for detecting the fault. As the sound generation device, for example, a horn generally provided in a vehicle is used.

The sound generation device generates a sound of which the frequency characteristics are known in advance. Each of the sound collectors 10G1 to 10G12 of the sound collector array 10G inputs a sound which is output from the sound generation device, and each outputs an electric signal. The fault determination section in the ECU determines whether or not each of the sound collectors 10G1 to 10G12 is faulty on the basis of each electric signal. In the determination method, for example, when the time period for which the electric signal is zero continues after a certain time period has passed, or when a constant value of the electric signal continues after a certain time period has passed, it is determined that the sound collector is faulty. In addition, in the fault determination section, the sound collector, which is determined faulty, is excluded from the candidates of the sound collectors used in the sound source detection or the sound source position measurement, whereby the sound collector is set not to be selectable.

As shown in FIG. 15, for example, if it is determined that the sound collector 10G9 is faulty, the sound collector 10G9 is excluded from the selectable targets, whereby the selection is made among the other eleven sound collectors. When the spacing between the pair of the sound collectors of the sound collector 10G9 and the sound collector 10G6 is set to 3xL, even though the sound collector 10G9 cannot be used, the spacing of 3xL can be set through another combination of a pair of the sound collectors (for example, a pair of the sound collectors of the sound collector 10G2 and the sound collector 10G6).

According to the approaching vehicle detection device, the detection is performed without the faulty sound collector, and thus it is possible to improve the reliability of the detection of the sound source (approaching vehicle).

As described in the above configuration, when the sound collector which is determined faulty is excluded, the number of selectable pairs of the sound collectors decreases. Accordingly, the reliability of the detection of the sound source (approaching vehicle) may be provided, and may be lowered in accordance with a decrease in the number of combinations of the pairs of the sound collectors. By adding the reliability to the approaching vehicle information, the contents of the driving support is changed in accordance with the reliability in the driving support device 2. For example, when a process such as alarm output to a driver is continuously performed after the approaching vehicle detection, if the reliability is low, it is possible to perform control to decrease the alarm or the vehicle control. In addition, the reliability may be set to be low on the basis of a ratio of the total number of the sound collectors to the number of the operable sound collectors, which is decreased by the number of the sound collectors which cannot be used due to the fault, or a ratio of the faulty sound collectors to the operable sound collectors.

According to the approaching vehicle detection device, by lowering the reliability in accordance with the faulty sound collector, it is possible to change the degree of the driving support on the basis of the reliability, and therefore it is possible to perform the driving support on the basis of the reliability of the detection.

Further, the sensitivity of the sound collectors may change with aging, compared with the initial state thereof. In each of the approaching vehicle detection devices, under the premise that the sensitivities of the sound collectors included in each sound collector array are constant, the process of detecting the sound source (approaching vehicle) is performed. Accordingly, if there is a sound collector with the sensitivity different from the other sound collectors among the sound collectors included in the sound collector array, the detection performance is lowered. Therefore, it is preferable to inspect the sensitivities of the sound collectors at stated periods and adjust the sensitivities as necessary.

Hence, before shipping of the approaching vehicle detection device, a sound with a given sound pressure is generated for each frequency, and the sounds at the frequencies are input through the sound collectors included in the sound collector array, thereby respectively outputting electric signals. Then, each sound collector records the sound pressure at each frequency on the basis of the electric signal. In the initial setting, since there is a relationship among the sound pressures which are output by the sound collectors for each frequency, for example, a coefficient for adjusting the sensitivity is set to 1.0 as an initial value. For example, at the frequency of 200 Hz, the sound pressure is 1000, and the coefficient is 1.0, and at the frequency of 250 Hz, the sound pressure is 1010, and the coefficient is 1.0. It should be noted that, as the sound generation device, for example, a horn generally provided in a vehicle is used.

After aging, the sound with the same sound pressure is generated for each frequency, and the sounds at the frequencies are input through the sound collectors included in the sound collector array, thereby respectively outputting electric signals. Then, each sound collector records the sound pressure at each frequency on the basis of the electric signal. Furthermore, each sound collector compares the sound pressure with the initial sound pressure for each frequency, and updates the coefficient such that the sound pressure is the same as the initial sound pressure. For example, in the sound collector A, when the currently measured sound pressure is 980 at the frequency of 250 Hz, the coefficient is updated to 1.02. Further, when the currently measured sound pressure is 1010 at the frequency of 250 Hz, the coefficient is kept at 1.0. It should be noted that the sound pressure may be measured twice or more by each sound collector and the average thereof may be used as the sound pressure of each sound collector.

In addition, in each sound collector, the sound pressure, which is output from the sound collector, at each frequency may be multiplied by each updated coefficient by using a coefficient table as a filter in which the table is formed of the updated coefficients at the frequencies, and may be used as the sound pressure after sensitivity adjustment in the process of detecting the sound source. For example, in the sound collector A, at the frequency of 250 Hz, the sound pressure of 980 is multiplied by the coefficient of 1.02, and thereby the sound pressure of 1000 is output. Further, at the frequency of 250 Hz, the sound pressure of 1010 is multiplied by the coefficient of 1.0, and thereby the sound pressure of 1010 is output.

In addition, it is preferable that, when the sensitivity of the sound collector is adjusted, there be no sound source other than the sound generated for adjustment. However, in the case of the approaching vehicle detection device mounted on the vehicle, the host vehicle itself serves as a sound source. Accordingly, when the host vehicle does not generate a sound, it is preferable to adjust the sensitivity. For example, while the system of the vehicle is not running yet after a driver issues an instruction to activate the system of the vehicle in a state where the vehicle is stationary (for example, at the moment the driver inserts an engine key or starts to turn the engine key), the sound for the sensitivity adjustment is generated, and thereby the sensitivity adjustment is performed. Thereafter, the system of the vehicle is activated.

As described above, the sound generation for adjusting the sensitivities of the sound collectors and the calculation process are performed at once. Accordingly, a driver is able to activate the normal system without feeling any discomfort, and the sensitivity adjustment is performed before the system is activated. Hence, the sensitivity adjustment is not affected by a disturbing sound such as an engine sound.

Further, in a certain case, it may be difficult to prevent the adjustment from being affected by another sound source even before the system is activated. In this case, by measuring and recording the sound pressure immediately before each sound collector receives the sound for the sensitivity adjustment, if the sound pressure which is output from the sound collector immediately before the generation of the sound for the sensitivity adjustment at each frequency is greater than the sound pressure of the sound which is expected to be generated by one sound source, the sensitivity adjustment does not have to be performed. In such a manner, it is possible to prevent the sensitivity adjustment from failing due to the affection of the external sound source.

According to the approaching vehicle detection device, the sensitivities of the sound collectors included in the sound collector array are kept constant even after aging, and thus it is possible to enhance the detection performance of the sound source (approaching vehicle).

Although the embodiments of the present invention have hitherto been described, the present invention is not limited to the present embodiments, and may be modified into various forms.

For example, in the present embodiment, the invention is applied to the approaching vehicle detection device which is mounted in the vehicle and provides the detected approaching vehicle information to the driving support device, but a different configuration of the approaching vehicle detection device may be adopted. For example, the approaching vehicle detection device may be an approaching vehicle detection function incorporated in the driving support device, and may be an approaching vehicle detection device having an alarm function or the like.

Further, in the present embodiment, in order to mainly detect an approaching vehicle on the front side of the host vehicle, a plurality of the pairs of the sound collectors is arranged at the front end of the host vehicle. However, in order to mainly detect an approaching vehicle on the rear side of the host vehicle, a plurality of the pairs of the sound collectors may be arranged at the rear end of the host vehicle.

Furthermore, in the present embodiment, regarding the arrangement of the plurality of sound collectors, several examples of the number of the sound collectors and the positions of the arranged sound collectors were described. However, in a case of a configuration in which a single pair of sound collectors with at least a narrow spacing and a single pair of sound collectors with a spacing wider than that are provided, the number of the sound collectors and the positions of the arranged sound collectors may be modified in various ways.

Moreover, in the present embodiment, an example of the sound source detection method using the pair of the sound collectors with the narrow spacing and the sound source position measurement method using the pair of the sound collectors with the wide spacing was given. However, regarding the sound source detection method using the pair of the sound collectors with the narrow spacing and the sound source position measurement method using the pair of the sound collectors with the wide spacing, different methods may be applied.

In addition, in the present embodiment, the positions of all the sound collectors included in the sound collector array is fixed, but the sound collectors included in the sound collector array may be configured to be movable in the vehicle width direction. As described above, by changing the positions of the sound collectors, the sound collector spacings can be changed to be optimum. Therefore, when detecting the sound source, by reducing the spacing between the pair of the sound collectors, it is possible to enhance the noise resistance performance. In addition, when measuring the position of the sound source, by increasing the spacing between the pair of the sound collectors, it is possible to enhance the maximum detectable distance performance. Thereby, it is possible to obtain the optimum detection performance at any time. By making the sound collectors movable in such a manner, the sound collector array, which can be applied to the present invention, may be constituted of two sound collectors.

### Industrial Applicability

The present invention can be applied to an approaching vehicle detection device mounted on the vehicle, and an approaching vehicle detection method for detecting an approaching vehicle.

### Reference Signs List

1A, 1B, 1C: APPROACHING VEHICLE DETECTION DEVICE
2: DRIVING SUPPORT DEVICE
10A, 10B, 10C, 10D, 10E, 10F, 10G: SOUND COLLECTOR ARRAY
11A, 11B, 11C, 11D: LEFT SIDE SOUND COLLECTOR UNIT
12A, 12B, 12C, 12D: RIGHT SIDE SOUND COLLECTOR UNIT
13A, 13B, 13C, 13D: FIRST SOUND COLLECTOR
14A, 14B, 14C: SECOND SOUND COLLECTOR
15A, 15B, 15C: THIRD SOUND COLLECTOR
16A, 16B, 16C, 16D: FOURTH SOUND COLLECTOR
17C: REAR SIDE SOUND COLLECTOR
18D: CENTER SOUND COLLECTOR
10E1 ∼ 10E7, 10F1 ∼ 10F6, 10G1 ∼ 10G12: SOUND COLLECTOR
21A, 21B, 21C : FILTER
22A, 22B, 22C: CROSS-CORRELATION CALCULATION SECTION
23A, 23B, 23C: PHASE DIFFERENCE DISTRIBUTION CALCULATION SECTION
24A, 24B, 24C: SOUND SOURCE DETECTION SECTION
25A, 25B, 25C: SOUND SOURCE FREQUENCY COMPONENT CALCULATION SECTION
26A, 26B, 26C: SOUND SOURCE FREQUENCY COMPONENT FILTER
27A, 27B, 27C: PHASE DIFFERENCE CHANGE CALCULATION SECTION
28A, 28B, 28C: SOUND PRESSURE CHANGE CALCULATION SECTION
29A, 29B, 29C: MOVEMENT DIRECTION DETERMINATION SECTION
30A, 30B, 30C: APPROACHING VEHICLE DETERMINATION SECTION

## Claims

1. An approaching vehicle detection device (1A, 1B, 1C) that detects an approaching vehicle on the basis of sounds collected by a plurality of sound collectors (10, 11, 12, 13, 14, 15, 16, 17C, 18D),
**characterized in that** whether a sound source is present or not is determined using the cross-correlation value and distribution of the phase differences of each sound collected by at least a single pair of the sound collectors (10, 11, 12, 13, 14, 15, 16, 17C, 18D), if it is determined that the sound source is present, a movement direction of the sound source which is present is detected using the temporal change in the phase difference and temporal change of the sound pressures of each sound collected by a different single pair of the sound collectors (10, 11, 12, 13, 14, 15, 16, 17C, 18D) which are disposed to be more widely spaced than the single pair of the sound collectors (10, 11, 12, 13, 14, 15, 16, 17C, 18D), and whether or not there is a vehicle approaching is determined on the basis of the detected movement direction.

2. The approaching vehicle detection device (1A, 1B, 1C) according to claim 1, comprising two pairs of the sound collectors (11, 12) that are respectively disposed on a left side and a right side of a vehicle in a vehicle width direction,
wherein whether a sound source is present or not is determined using the cross-correlation value and distribution of the phase differences of each sound collected by the two pairs of the sound collectors (11, 12), if it is determined that the sound source is present, a movement direction of the sound source which is present is detected using the temporal change in the phase difference and temporal change of the sound pressures of each sound collected by an outer sound collector of one pair (11) of the sound collectors in the vehicle width direction and an outer sound collector of the other pair (12) of the sound collectors in the vehicle width direction among the two pairs of the sound collectors (11, 12).

3. The approaching vehicle detection device (1A, 1B, 1C) according to claim 1, comprising three sound collectors (11, 12, 18D) that are arranged in a vehicle width direction of a vehicle,
wherein whether a sound source is present or not is determined using the cross-correlation value and distribution of the phase differences of each sound collected by a center sound collector (18D) and an outer sound collector (11, 12) in the vehicle width direction among the three sound collectors, if it is determined that the sound source is present, a movement direction of the sound source which is present is detected using the temporal change in the phase difference and temporal change of the sound pressures of each sound collected by both of the two outer sound collectors (11, 12) in the vehicle width direction among the three sound collectors (11, 12, 18D).

4. The approaching vehicle detection device (1A, 1B, 1C) according to any one of claims 1 to 3, wherein the different single pair (11, 12) of the sound collectors, which are disposed to be widely spaced, are omnidirectional sound collectors, and both of them are respectively disposed at both ends in the vehicle width direction.

5. The approaching vehicle detection device (1A, 1B, 1C) according to claim 4, wherein at least one sound collector (17C) is disposed on a side opposite to a side on which each pair of the sound collectors (11, 12) is disposed in a front-rear direction of the vehicle.

6. The approaching vehicle detection device (1A, 1B, 1C) according to any one of claims 1 to 5, wherein spacings of the plurality of sound collectors (10, 11, 12, 13, 14, 15, 16, 17C, 18D) are set as spacings which are specified by a Fibonacci sequence.

7. The approaching vehicle detection device (1A, 1B, 1C) according to any one of claims 1 to 6, comprising fault diagnosis means for diagnosing faults in the sound collector (10, 11, 12, 13, 14, 15, 16, 17C, 18D),
wherein if there is the sound collector (10, 11, 12, 13, 14, 15, 16, 17C, 18D)which is diagnosed as faulty by the fault diagnosis means, the sound collector (10, 11, 12, 13, 14, 15, 16, 17C, 18D), which is diagnosed as faulty, is excluded from the sound collectors (10, 11, 12, 13, 14, 15, 16, 17C, 18D) which are used in detecting the approaching vehicle.

8. The approaching vehicle detection device (1A, 1B, 1C) according to claim 7, wherein if there is the sound collector (10, 11, 12, 13, 14, 15, 16, 17C, 18D) which is diagnosed as faulty by the fault diagnosis means, the reliability of the detection of the approaching vehicle is set to be low.

9. The approaching vehicle detection device (1A, 1B, 1C) according to any one of claims 1 to 8, comprising sound generating means for generating a sound with a specific frequency component,
wherein the sound, which is generated by the sound generating means, is collected by each of the plurality of sound collectors (10, 11, 12, 13, 14, 15, 16, 17C, 18D), and the plurality of sound collectors (10, 11, 12, 13, 14, 15, 16, 17C, 18D) is adjusted to have constant sensitivities to the sound with the specific frequency component.

10. An approaching vehicle detection method that detects an approaching vehicle on the basis of sounds collected by a plurality of sound collectors (10, 11, 12, 13, 14, 15, 16, 17C, 18D),
**characterized in that** whether a sound source is present or not is determined using the cross-correlation value and distribution of the phase differences of each sound collected by at least a single pair of the sound collectors (10, 11, 12, 13, 14, 15, 16, 17C, 18D), if it is determined that the sound source is present, a movement direction of the sound source which is present is detected using the temporal change in the phase difference and temporal change of the sound pressures of each sound collected by a different single pair of the sound collectors (10, 11, 12, 13, 14, 15, 16, 17C, 18D) which are disposed to be more widely spaced than the single pair of the sound collectors (10, 11, 12, 13, 14, 15, 16, 17C, 18D), and whether or not there is a vehicle approaching is determined on the basis of the detected movement direction.

## Patentansprüche

1. Eine Vorrichtung (1A, 1 B, 1 C) zur Erkennung entgegenkommender Fahrzeuge, die ein entgegenkommendes Fahrzeug auf der Grundlage von Geräuschen erfasst, die von einer Vielzahl von Schallsammlern (10, 11, 12, 13, 14, 15, 16, 17C, 18D) gesammelt werden,
**dadurch gekennzeichnet, dass** unter Verwendung des Kreuzkorrelationswerts und der Verteilung der Phasendifferenzen jedes von mindestens einem einzelnen Paar der Schallsammler (10, 11, 12, 13, 14, 15, 16, 17C, 18D) gesammelten Geräuschs bestimmt wird, ob eine Geräuschquelle vorhanden ist oder nicht, wenn bestimmt wird, dass die Geräuschquelle vorhanden ist, eine Bewegungsrichtung der vorhandenen Geräuschquelle unter Verwendung der Änderung der Phasendifferenz über der Zeit und der Änderung der Schalldrücke jedes Geräuschs über der Zeit erfasst wird, das durch ein anderes einzelnes Paar der Schallsammler (10, 11, 12, 13, 14, 15, 16, 17C, 18D) gesammelt wird, die so angeordnet sind, dass sie weiter voneinander beabstandet sind als das einzelne Paar der Schallsammler (10, 11, 12, 13, 14, 15, 16, 17C, 18D), und auf der Grundlage der erfassten Bewegungsrichtung bestimmt wird, ob ein Fahrzeug entgegenkommt oder nicht.

2. Die Vorrichtung (1A, 1 B, 1C) zur Erkennung entgegenkommender Fahrzeuge nach Anspruch 1, mit zwei Paaren der Schallsammler (11, 12), die in einer Fahrzeugbreitenrichtung jeweils auf einer linken Seite und auf einer rechten Seite eines Fahrzeugs angeordnet sind,
wobei unter Verwendung des Kreuzkorrelationswerts und der Verteilung der Phasendifferenzen jedes von den zwei Paaren von Schallsammlern (11, 12) gesammelten Geräuschs bestimmt wird, ob eine Geräuschquelle vorhanden ist oder nicht, wenn bestimmt wird, dass die Geräuschquelle vorhanden ist, eine Bewegungsrichtung der vorhandenen Geräuschquelle unter Verwendung der Änderung der Phasendifferenz über der Zeit und der Änderung der Schalldrücke über der Zeit erfasst wird, die von einem äußeren Schallsammler eines Paars (11) der Schallsammler in der Fahrzeugbreitenrichtung und einem äußeren Schallsammler des anderen Paars (12) der Schallsammler in der Fahrzeugbreitenrichtung aus den zwei Paaren von Schallsammlern (11, 12) gesammelt werden.

3. Die Vorrichtung (1A, 1 B, 1 C) zur Erkennung entgegenkommender Fahrzeuge nach Anspruch 1, mit drei Schallsammlern (11, 12, 18D), die in einer Fahrzeugbreitenrichtung eines Fahrzeugs angeordnet sind,
wobei unter Verwendung des Kreuzkorrelationswerts und der Verteilung der Phasendifferenzen jedes von einem mittleren Schallsammler (18D) und einem in der Fahrzeugbreitenrichtung äußeren Schallsammler (11, 12) aus den drei Schallsammlern gesammelten Geräuschs bestimmt wird, ob eine Geräuschquelle vorhanden ist oder nicht, wenn bestimmt wird, dass die Geräuschquelle vorhanden ist, eine Bewegungsrichtung der vorhandenen Geräuschquelle unter Verwendung der Änderung der Phasendifferenzen über der Zeit und der Änderung der Schalldrücke über der Zeit für jedes Geräusch erfasst wird, das durch beide in der Fahrzeugbreitenrichtung äußeren Schallsammler (11, 12) unter den drei Schallsammlern (11, 12, 18D) gesammelt wurde.

4. Die Vorrichtung (1A, 1 B, 1 C) zur Erkennung entgegenkommender Fahrzeuge nach einem der Ansprüche 1 bis 3, wobei das andere einzelne Paar (11, 12) der Schallsammler, die so angeordnet sind, dass sie weit beabstandet sind, omnidirektionale Schallsammler sind, und beide jeweils an beiden Enden in der Fahrzeugbreitenrichtung angeordnet sind.

5. Die Vorrichtung (1A, 1 B, 1 C) zur Erkennung entgegenkommender Fahrzeuge nach Anspruch 4, wobei mindestens ein Schallsammler (17C) auf einer Seite gegenüber einer Seite angeordnet ist, auf der jedes Paar der Schallsammler (11, 12) in einer Fahrzeuglängsrichtung angeordnet ist.

6. Die Vorrichtung (1A, 1B, 1C) zur Erkennung entgegenkommender Fahrzeuge nach einem der Ansprüche 1 bis 5, wobei Abstände der Vielzahl von Schallsammlern (10, 11, 12, 13, 14, 15, 16, 17C, 18D) als Abstände festgelegt sind, die durch eine Fibonacci-Reihe spezifiziert sind.

7. Die Vorrichtung (1A, 1B, 1C) zur Erkennung entgegenkommender Fahrzeuge 1 bis 6, mit Fehlerdiagnoseeinrichtungen zum Diagnostizieren von Fehlern im Schallsammler (10, 11, 12, 13, 14, 15, 16, 17C, 18D),
wobei, falls es den Schallsammler (10, 11, 12, 13, 14, 15, 16, 17C, 18D) gibt, der von der Fehlerdiagnoseeinrichtung als fehlerhaft diagnostiziert ist, der Schallsammler (10, 11, 12, 13, 14, 15, 16, 17C, 18D), der als fehlerhaft diagnostiziert ist aus den Schallsammlern (10, 11, 12, 13, 14, 15, 16, 17C, 18D) ausgeschlossen wird, die zur Erkennung entgegenkommender Fahrzeuge verwendet werden.

8. Die Vorrichtung (1A, 1 B, 1C) zur Erkennung entgegenkommender Fahrzeuge nach Anspruch 7, wobei, falls es den Schallsammler (10, 11, 12, 13, 14, 15, 16, 17C, 18D) gibt, der von der Fehlerdiagnoseeinrichtung als fehlerhaft diagnostiziert wurde, die Verlässlichkeit der Erfassung des entgegenkommenden Fahrzeugs als niedrig festgelegt ist.

9. Die Vorrichtung (1A, 1 B, 1 C) zur Erkennung entgegenkommender Fahrzeuge 1 bis 8, mit einer Geräuscherzeugungseinrichtung zum Erzeugen eines Geräuschs mit einer bestimmten Frequenzkomponente,
wobei das Geräusch, das von der Geräuscherzeugungsvorrichtung erzeugt wird, durch jeden aus der Vielzahl von Schallsammlern (10, 11, 12, 13, 14, 15, 16, 17C, 18D) gesammelt wird, und die Vielzahl der Schallsammler (10, 11, 12, 13, 14, 15, 16, 17C, 18D) so angepasst ist, dass sie konstante Empfindlichkeiten für das Geräusch mit der bestimmten Frequenzkomponente aufweist.

10. Ein Verfahren zur Erkennung eines entgegenkommenden Fahrzeugs, das ein entgegenkommendes Fahrzeug auf der Grundlage von Geräuschen erkennt, die von einer Vielzahl von Schallsammlern (10, 11, 12, 13, 14, 15, 16, 17C, 18D) gesammelt werden,
**dadurch gekennzeichnet, dass**
unter Verwendung des Kreuzkorrelationswerts und der Verteilung der Phasendifferenzen jedes von mindestens einem einzelnen Paar der Schallsammler (10, 11, 12, 13, 14, 15, 16, 17C, 18D) gesammelten Geräuschs bestimmt wird, ob eine Geräuschquelle vorhanden ist oder nicht, wenn bestimmt wird, dass die Geräuschquelle vorhanden ist, eine Bewegungsrichtung der vorhandenen Geräuschquelle unter Verwendung der Änderung der Phasendifferenz über der Zeit und der Änderung der Schalldrücke jedes Geräuschs über der Zeit erfasst wird, das durch ein anderes einzelnes Paar der Schallsammler (10, 11, 12, 13, 14, 15, 16, 17C, 18D) gesammelt wird, die so angeordnet sind, dass sie weiter voneinander beabstandet sind als das einzelne Paar der Schallsammler (10, 11, 12, 13, 14, 15, 16, 17C, 18D), und auf der Grundlage der erfassten Bewegungsrichtung bestimmt wird, ob ein Fahrzeug entgegenkommt oder nicht.

## Revendications

1. Dispositif de détection de véhicule se rapprochant (1A, 1B, 1C) qui détecte un véhicule se rapprochant sur la base de sons collectés par une pluralité de collecteurs de son (10, 11, 12, 13, 14, 15, 16, 17C, 18D),
**caractérisé en ce que** le fait qu'une source sonore est présente ou pas est déterminé en utilisant la valeur de corrélation croisée et une distribution des différences de phase de chaque son collecté par au moins une unique paire des collecteurs de son (10, 11, 12, 13, 14, 15, 16, 17C, 18D), si l'on détermine que la source sonore est présente, une direction de déplacement de la source sonore qui est présente est détectée en utilisant le changement temporel de la différence de phase et le changement temporel des pressions acoustiques de chaque son collecté par une unique paire différente des collecteurs de son (10, 11, 12, 13, 14, 15, 16, 17C, 18D) qui sont disposés pour être plus largement espacés que la paire unique des collecteurs de son (10, 11, 12, 13, 14, 15, 16, 17C, 18D), et le fait qu'un véhicule se rapproche ou non est déterminé sur la base de la direction de déplacement détectée.

2. Dispositif de détection de véhicule se rapprochant (1A, 1B, 1C) selon la revendication 1, comportant deux paires de collecteurs de son (11, 12) qui sont disposées de manière respective sur un côté gauche et un côté droit d'un véhicule dans le sens de la largeur du véhicule,
dans lequel le fait qu'une source sonore est présente ou pas est déterminé en utilisant la valeur de corrélation croisée et la distribution des différences de phase de chaque son collecté par les deux paires des collecteurs de son (11, 12), si l'on détermine que la source sonore est présente, une direction de déplacement de la source sonore qui est présente est détectée en utilisant le changement temporel de la différence de phase et le changement temporel des pressions acoustiques de chaque son collecté par un collecteur de son extérieur d'une paire (11) des collecteurs de son dans le sens de la largeur du véhicule et un collecteur de son extérieur de l'autre paire (12) des collecteurs de son dans le sens de la largeur du véhicule parmi les deux paires des collecteurs de son (11, 12).

3. Dispositif de détection de véhicule se rapprochant (1A, 1B, 1C) selon revendication 1, comportant trois collecteurs de son (11, 12, 18D) qui sont disposés dans le sens de la largeur du véhicule d'un véhicule,
dans lequel le fait qu'une source sonore est présente ou pas est déterminé en utilisant la valeur de corrélation croisée et la distribution des différences de phase de chaque son collecté par un collecteur de son central (18D) et un collecteur de son extérieur (11, 12) dans le sens de la largeur du véhicule parmi les trois collecteurs de son, si l'on détermine que la source sonore est présente, une direction de déplacement de la source sonore qui est présente est détectée en utilisant le changement temporel de la différence de phase et le changement temporel des pressions acoustiques de chaque son collecté par les deux collecteurs de son extérieurs (11, 12) dans le sens de la largeur du véhicule parmi les trois collecteurs de son (11, 12, 18D).

4. Dispositif de détection de véhicule se rapprochant (1A, 1B, 1C) selon l'une quelconque des revendications 1 à 3, dans lequel la paire unique différente (11, 12) des collecteurs de son, qui sont disposés pour être largement espacés, est constituée par des collecteurs de son omnidirectionnels, et les deux sont disposés de manière respective aux deux extrémités dans le sens de la largeur du véhicule.

5. Dispositif de détection de véhicule se rapprochant (1A, 1B, 1C) selon la revendication 4, dans lequel au moins un collecteur de son (17C) est disposé sur un côté opposé à un côté sur lequel chaque paire des collecteurs de son (11, 12) est disposée dans une direction avant-arrière du véhicule.

6. Dispositif de détection de véhicule se rapprochant (1A, 1B, 1C) selon l'une quelconque des revendications 1 à 5, dans lequel des espacements de la pluralité de collecteurs de son (10, 11, 12, 13, 14, 15, 16, 17C, 18D) sont établis comme des espacements qui sont spécifiés par une séquence de Fibonacci.

7. Dispositif de détection de véhicule se rapprochant (1A, 1B, 1C) selon l'une quelconque des revendications 1 à 6, comportant des moyens de diagnostic de panne destinés à diagnostiquer des pannes dans le collecteur de son (10, 11, 12, 13, 14, 15, 16, 17C, 18D),
dans lequel, s'il y a le collecteur de son (10, 11, 12, 13, 14, 15, 16, 17C, 18D) qui est diagnostiqué comme défectueux par les moyens de diagnostic de panne, le collecteur de son (10, 11, 12, 13, 14, 15, 16, 17C, 18D), qui est diagnostiqué comme défectueux, est exclu des collecteurs de son (10, 11, 12, 13, 14, 15, 16, 17C, 18D) qui sont utilisés dans la détection du véhicule se rapprochant.

8. Dispositif de détection de véhicule se rapprochant (1A, 1B, 1C) selon la revendication 7, dans lequel, s'il y a le collecteur de son (10, 11, 12, 13, 14, 15, 16, 17C, 18D) qui est diagnostiqué comme défectueux par les moyens de diagnostic de panne, la fiabilité de la détection du véhicule se rapprochant est établie comme faible.

9. Dispositif de détection de véhicule se rapprochant (1A, 1B, 1C) selon l'une quelconque des revendications 1 à 8, comportant des moyens de génération de son destinés à générer un son avec une composante de fréquence spécifique,
dans lequel le son, qui est généré par les moyens de génération de son, est collecté par chaque collecteur de la pluralité de collecteurs de son (10, 11, 12, 13, 14, 15, 16, 17C, 18D), et la pluralité de collecteurs de son (10, 11, 12, 13, 14, 15, 16, 17C, 18D) est ajustée pour avoir des sensibilités au son constantes avec la composante de fréquence spécifique.

10. Procédé de détection de véhicule se rapprochant qui détecte un véhicule se rapprochant sur la base de sons collectés par une pluralité de collecteurs de son (10, 11, 12, 13, 14, 15, 16, 17C, 18D),
**caractérisé en ce que** le fait qu'une source sonore est présente ou pas est déterminé en utilisant la valeur de corrélation croisée et la distribution des différences de phase de chaque son collecté par au moins une unique paire des collecteurs de son (10, 11, 12, 13, 14, 15, 16, 17C; 18D), si l'on détermine que la source sonore est présente, une direction de déplacement de la source sonore qui est présente est détectée en utilisant le changement temporel de la différence de phase et le changement temporel des pressions acoustiques de chaque son collecté par une unique paire différente des collecteurs de son (10, 11, 12, 13, 14, 15, 16, 17C, 18D) qui sont disposés pour être espacés plus largement que la paire unique des collecteurs de son (10, 11, 12, 13, 14, 15, 16, 17C, 18D), et le fait qu'un véhicule se rapproche est déterminé sur la base de la direction de déplacement détectée.
